# EUROPÄISCHE PATENTSCHRIFT

(11) **EP 3 521 670 B1**
(45) Veröffentlichungstag und Bekanntmachung des Hinweises auf die Patenterteilung: **26.10.2022**
(21) Anmeldenummer: 19155141.5
(22) Anmeldetag: 01.02.2019
(51) Int. Cl.: F16K 27/02

(54) **VENTILGEHÄUSE-BAUKASTENSYSTEM UND HUBVENTIL**
VALVE HOUSING MODULE SYSTEM AND LIFTING VALVE
SYSTÈME MODULAIRE DE BOÎTIER DE SOUPAPE ET SOUPAPE À LEVÉE RECTILIGNE

(30) Priorität: 01.02.2018 DE 102018102251
(43) Veröffentlichungstag der Anmeldung: 07.08.2019
(73) Patentinhaber: Samson Aktiengesellschaft, 60314 Frankfurt am Main (DE)
(72) Erfinder: MERSCHER, Michael, 63332 Rödermark (DE)
(74) Vertreter: Schmid, Nils T.F.

(56) Entgegenhaltungen:
- EP-A1- 3 239 575
- WO-A1-2012/012951
- WO-A1-2017/063187
- US-A- 3 601 147
- US-A- 3 648 718
- US-A1- 2009 320 931

## Beschreibung

Die Erfindung betrifft ein Ventilgehäuse-Baukastensystem zum Bereitstellen einer von mehreren unterschiedlichen Funktions- oder Konstruktions-Konfigurationen für ein Hubventil. Ein solches Hubventil ist üblicherweise zum Einstellen einer Prozessfluidströmung einer prozesstechnischen Anlage, wie einer Chemieanlage, einer Lebensmittel verarbeitenden Anlage, einem Kraftwerk oder dergleichen eingerichtet. Hubventile zeichnen sich dadurch aus, dass sie ein translatorisch bewegliches Hubventilglied aufweisen. Die Erfindung betrifft auch ein Hubventil mit einem entlang einer Hubachse translatorisch beweglichen Hubventilglied zum Einstellen einer Prozessfluidströmung einer prozesstechnischen Anlage.

Die Anmelderin entwickelt, erzeugt und vertreibt Hubventile unterschiedlichster Bauarten, die an kundenspezifische Anforderungen angepasst sein können.

Beispielsweise werden von der Anmelderin Hubventile mit Kegelventil-Konfiguration bereitgestellt (sogenannte Kegelventile). Das Ventilgehäuse eines Kegelventils setzt sich üblicherweise aus einem Gehäusekorpus mit darin eingesetzten Ventilsitz und Gehäusedeckel zusammen. Die Ventilbildung eines Kegelventils erfolgt durch ein namengebendes kegelartiges Stellglied, das von einer Stellstange getragen ist und gemeinsam mit der Stellstange eine translatorische Hub-Betätigungsbewegung entlang einer translatorischen Hubachse vollführt. Der sogenannte Ventilkegel hat eine sich abschnittsweise oder vollständig in Hubachsenrichtung verjüngende Kontur, die nicht idealkonusförmig sein muss. Abhängig von der Relativstellung des kegelartigen Stellgliedes zu dem Ventilsitz erfolgen unterschiedliche Einstellungen der Prozessfluidströmung. Beispielsweise kann ein Kegelventil eine vollständig geschlossene Stellung einnehmen, in der das kegelartige Stellglied in einem abdichtenden Kontakteingriff mit dem Ventilsitz steht. Wenn das Stellglied von dem Ventilsitz fortbewegt wird, stellt das Kegelventil eine zunehmend größer werdende Öffnungsweite bereit, durch die Prozessfluid vom Eingang zum Ausgang des Gehäusekorpus fließen kann. Die Stellstange, die das kegelartige Stellglied trägt, wird üblicherweise durch eine Öffnung in dem Gehäusedeckel aus dem Gehäuse hinausgeführt. Außerhalb des Gehäuses kann ein pneumatischer oder elektrischer Stellaktor auf die Stellstange zugreifen, um diese zu betätigen und so das kegelartige Stellglied relativ zu dem Ventilsitz zu bewegen. Der Gehäusedeckel ist üblicherweise in den Gehäusekorpus eingeschraubt. Zur Abdichtung des Prozessfluid führenden Gehäuseinneren gegenüber der Gehäuseaußenseite weisen Kegelventile üblicherweise wenigstens eine Dichtung zwischen dem Gehäusekorpus und dem Gehäusedeckel auf. Ferner ist in der Regel eine Dichtung zwischen dem Gehäusedeckel und der darin geführten Ventilstange vorgesehen. Zur Gewährleistung einer Dichtung zwischen Ein- und Ausgang im geschlossenen Kegelventil-Zustand ist ferner in der Regel eine Dichtung zwischen dem Ventilsitz und dem Gehäusekorpus vorgesehen. Unmittelbar an dem Gehäusedeckel kann ein Stellaktor oder ein den Stellaktor tragendes Joch oder dergleichen vorgesehen sein. Ein Kegelventil zeigt beispielsweise DE 10 2006 061 017 A1.

Die Anmelderin stellt auch andersartige Ventile her und vertreibt diese. Hierzu gehören insbesondere die als Käfigventil konfigurierten Hubventile (sogenannte Käfigventile). Käfigventile sind mit einem Stellglied ausgestattet, das eine sich in Richtung der Hubachse über eine gewisse Länge erstreckende zylindrische Außenseite aufweist. Ein solches Stellglied kann als kolbenartiges Stellglied oder Stellkolben bezeichnet sein. Der Stellkolben des Käfigventils wird betätigt durch eine Stellstange, die sich entlang der Hubachse translatorisch bewegt. Das kolbenartige Stellglied wird bei einem Käfigventil in dem namensgebenden Ventilkäfig geführt. Der Ventilkäfig ist ein üblicherweise hohlzylindrischer Körper, welcher eine Innenseite aufweist, die im Wesentlichen formkomplementär zu der zylindrischen Außenseite des Stellkolbens ist. Der Ventilkäfig kann eine oder mehrere Öffnungen aufweisen, welche dem Prozessfluid erlaubt, in Radialrichtung relativ zu der Hubachse und der damit korrespondierenden Käfigachse durch den Ventilkäfig zu fließen. Der Ventilkäfig ist in einem Gehäusekorpus des Käfigventils ortsfest gehalten und kann bei einem in einer Öffnungsstellung angeordneten Ventilkolben gestatten, dass Prozessfluid von einem Eingang des Gehäusekorpus zu einem Ausgang des Gehäusekorpus fließt. Wenn der Stellkolben sich relativ zu dem Ventilglied in einer Schließstellung befindet, sind die Radialöffnungen des Ventilkäfigs durch den Stellkolben verdeckt, so dass kein Prozessfluid von dem Eingang zum Ausgang des Gehäusekorpus fließen kann. Zum Befestigen des Ventilkäfigs an dem Gehäuse kann beispielsweise der hohlzylindrische Ventilkäfig auf einer Schulter des Gehäusekorpus sitzen und an einer Stirnseite durch eine Mutter-artige Befestigung oder mithilfe des Deckels an dem Gehäusekorpus befestigt sein. Die Stellstange wird bei dem Käfigventil üblicherweise durch einen Deckel in einen Außenbereich geführt, wo ein beispielsweise pneumatischer oder elektrischer Hub-Stellaktor auf die Stellstange zugreifen kann. Der Deckel wird an dem Gehäusekorpus üblicherweise mit einer Flanschverbindung befestigt. Ein Käfigventil zeigt beispielsweise DE 20 2016 104 466 U1.

US 2009/0320931 A1 offenbart ein universelles Trimsteuerventil und ein Verfahren zur Herstellung eines solchen Steuerventils. EP 3230575 A1 offenbart eine Käfigbaugruppe mit Drosselringen. Aus WO 2012/012951 A1 geht eine Ventilsitzeinrichtung zur Verwendung mit Fluidventilen hervor. WO 2017/063187 A1 offenbart ein mehrstufiges Anti-Stoß-Ventil. US 3,648,718 offenbart eine Ventilstruktur.

Aufgrund der unterschiedlichen Anwendungsgebiete von Kegelventilen und Käfigventilen gelten für beide Ventilarten individuelle, unterschiedliche Konstruktionsregeln. Bei den bekannten Kegel- und Käfigventilen sind der Deckel und der Korpus in der Regel als Gussteile realisiert. Für unterschiedliche Ventilarten und selbst für Ventile gleicher Art bei unterschiedlichen Anwendungszwecken sind unterschiedlich gestaltete Deckel erforderlich. Für jede Deckel-Gestaltung wird eine individuelle Gussform benötigt. Änderungen der Gussformen sind kostspielig und langwierig.

Aufgrund des stets bestehenden Preisdruckes hat sich die Anmelderin die Aufgabe gestellt, Ventile unterschiedlichster Funktions- und Konstruktions-Konfiguration bereitzustellen, um bei höchsten Qualitätsanforderungen beispielsweise an Dichtigkeit, Regelungsgenauigkeit, Schließwirkung, Verlässlichkeit und Haltbarkeit dennoch die Herstellungs-, Montage- und Wartungskosten zu senken.

Diese Aufgabe wird durch die Merkmale von Anspruch 1 und Anspruch 12 gelöst. Demnach ist ein Ventilgehäuse-Baukastensystem zum Bereitstellen einer von mehreren unterschiedlichen Funktions- oder Konstruktions-Konfigurationen für ein Hubventil vorgesehen. Das Ventil hat ein entlang einer Hubachse translatorisch bewegliches Hubventilglied. Das Hubventil ist eingerichtet zum Einstellen einer Prozessfluidströmung einer prozesstechnischen Anlage, wie einer Chemieanlage, einer Lebensmittel verarbeitenden Anlage, einem Kraftwerk oder dergleichen. Das erfindungsgemäße Ventilgehäuse-Baukastensystem umfasst einen Gehäusekorpus, einen Gehäusedeckel sowie mehrere verschiedene Adapter für je eine der unterschiedlichen Funktions- oder Konstruktions-Konfigurationen. Der Gehäusekorpus weist einen Prozessfluideingang, einen Prozessfluidausgang und einen zwischen dem Prozessfluideingang und dem Prozessfluidausgang angeordneten Prozessfluiddurchgang auf. Ferner umfasst der Gehäusekorpus eine Betätigungsöffnung zum Einführen der Stellstange zum Betätigen des Hubventilgliedes entlang der Hubachse.

Am Prozessfluidausgang und am Prozessfluideingang des Gehäusekorpus können Montageeinrichtungen, beispielsweise flanschartige Befestigungsabschnitte, zum Anbinden je einer Rohrleitung zum Führen von Prozessfluid vorgesehen sein. An dem Prozessfluiddurchgang des Gehäusekorpus kann ein Ventilsitz vorgesehen sein, der mit einem Hubventilglied schließend und/oder öffnend kooperieren kann. Ein Ventilsitz kann als Teil des Gehäusekorpus einstückig ausgebildet sein. Ein Ventilsitz kann ein ring-und/oder hülsenförmiger Sitz des Einsetz-Bauteils sein. Der Ventilsitz kann eine oder mehrere Dichtflächen zum abdichtenden Kooperieren mit dem Hubventilglied, insbesondere einem Ventilkegel, aufweisen. Zwischen dem Ventilsitz und dem Gehäusekorpus kann eine Dichtvorrichtung, wie eine Ringdichtung, angeordnet sein. Der Ventilsitz kann lösbar, beispielsweise mit einer Gewindeverbindung oder einer flanschartigen Verbindung, mit dem Gehäusekorpus verbunden sein.

Der Gehäusekorpus kann ein insbesondere einstückiger Körper sein, der aus einem oder mehreren Medien- und/oder temperaturbeständigen Materialien gefertigt ist. Beispielsweise kann der Gehäusekorpus ein einstückiger Metall-Gusskörper oder Schmiedekörper sein, der mit einer bearbeiteten, beispielsweise polierten und/oder beschichteten, beispielsweise lackiert, pulverbeschichtet, verchromt, emailliert, galvanisiert oder dergleichen ist. Es kann bevorzugt sein, dass der Gehäusekorpus einen Gehäuseinnenraum definiert, dessen Öffnungen vorzugsweise ausschließlich durch den Prozessfluideingang, den Prozessfluidausgang und die Betätigungsöffnungen realisiert sind. Es ist denkbar, dass ein Gehäusekorpus weitere Öffnungen zudem in dem Raum aufweist, beispielsweise Öffnungen zum Einführen von Sensorik können eine oder mehrere weitere Prozessfluid-Ein- oder Ausgänge.

Der Gehäusedeckel des Ventilgehäuse-Baukastensystems ist zum Abdecken der Betätigungsöffnung vorgesehen. Der Gehäusedeckel umfasst eine sich in Richtung der Hubachse erstreckende Durchgangsöffnung zum Aufnehmen der Stellstange. Insbesondere kann der Gehäusedeckel einen Befestigungsabschnitt zum Montieren eines insbesondere pneumatischen Stellantriebs oder eines Jochs, einer Laterne oder dergleichen zum Tragen eines Stellantriebs umfassen. Vorzugsweise ist die Durchgangsöffnung frei von Dichtmitteln zum Abdichten zwischen dem Gehäusedeckel und der Stellstange. Vorzugsweise ist die Durchgangsöffnung frei von Führungen, wie einem Gleitlager, einem Kugellager oder dergleichen zum translatorischen Führen der Stellstange. Bezüglich der Stellstange kann der Gehäusedeckel derart bemessen sein, dass die kleinste lichte Weite, insbesondere der kleinste Innendurchmesser, des Gehäusedeckels, insbesondere der Durchgangsöffnung, mindestens 1 mm oder mindestens 5 mm größer ist als der Außendurchmesser der Stellstange in dem Bereich, welcher durch die Durchgangsöffnung des Gehäusedeckels erstreckt. Der Gehäusedeckel kann aus einem temperaturund/oder medienbeständigen Material gebildet sein. Es ist denkbar, dass für den Gehäusekorpus und den Gehäusedeckel dieselbe Materialauswahl getroffen ist. Der Gehäusedeckel und der Gehäusekorpus können zur Montage des Gehäusedeckels in unmittelbarem Berührkontakt mit dem Gehäusekorpus ausgestaltet sein. Beispielsweise können der Gehäusekorpus und der Gehäusedeckel zueinander korrespondierende Flanschabschnitte zum Befestigen des Gehäusedeckels an dem Gehäusekorpus aufweisen. Der Gehäusedeckel kann einen tellerartigen Abdeckabschnitt aufweisen, der vorzugsweise dazu ausgestaltet sein kann, die Betätigungsöffnung des Gehäusekorpus in Radialrichtung und in Umfangsrichtung bezüglich der Hubachse mit Ausnahme der Durchgangsöffnung vollständig zu verschließen.

Erfindungsgemäß umfasst das Ventilgehäuse-Baukastensystem mehrere verschiedene Adapter für je eine der unterschiedlichen Funktions- oder Konstruktions-Konfigurationen für das Hubventil. Das Ventilgehäuse-Baukastensystem kann beispielsweise mehrere verschiedene Adapter zur konstruktiven Konfiguration des Hubventils als Kegelventil umfassen. Beispielsweise können je ein individueller Adapter für eine Konfiguration des Hubventils als Stellventil, Not-Schließ-Ventil, Not-Öffnen-Ventil, druckentlastetes Stell- oder Schließ-Ventil oder dergleichen vorgesehen sein. Beispielsweise kann je ein Adapter unterschiedlicher Konfiguration eines Kegelventils beispielsweise für unterschiedliche Regelbereiche, wie insbesondere einen Nenndurchfluss, einen Minimal-Durchfluss (oder eine Schließbewegung) und/oder einen Maximal-Durchfluss, definiert sein, insbesondere bezüglich eines bestimmten Prozessmediums und/oder eines bestimmten Prozess-Druck-Bereichs. Es ist auch denkbar, dass unterschiedliche Adapter für unterschiedliche Käfigventil-Konfigurationen zum Bereitstellen unterschiedlich konfigurierter Hubventile vorgesehen sein können. Es sei klar, dass bei dem Ventilgehäuse-Baukastensystem, derselbe Gehäusekorpus und derselbe Gehäusedeckel für die unterschiedlichen Konstruktions- oder Funktions-Konfigurationen vorgesehen sind, wobei die Funktions- oder Konstruktions-Konfiguration durch einen jeweiligen Adapter definiert wird.

Jeder der Adapter weist einen zylindrischen Halteflanschabschnitt mit vorbestimmter Flanschhöhe und einem vorbestimmten Flanschdurchmesser auf. Der Gehäusekorpus weist eine an den Halteflanschabschnitt angepasste Korpusschnittstelle auf. Der Gehäusedeckel umfasst eine an den Halteflanschabschnitt angepasste Deckelschnittstelle. Der Gehäusekorpus und der Gehäusedeckel des Ventilgehäuse-Baukastensystems sind mittels der Korpusschnittstelle bzw. der Deckelschnittstelle dazu ausgestaltet, den jeweiligen zylindrischen Halteflanschabschnitt der unterschiedlichen Funktions- oder Konstruktions-Konfigurationsadapter aufzunehmen und zu halten. Die Korpusschnittstelle, die Deckelschnittstelle und der Halteflanschabschnitt sind derart aufeinander abgestimmt, dass jeder der mehreren verschiedenen Adapter des Ventilgehäuse-Baukastensystems frei austauschbar zwischen dem Gehäusekorpus und dem Gehäusedeckel einsetzbar ist. Die Auswahl eines Konfigurations-Adapters entsprechend eines beliebigen gewünschten Ventiltyps stellt dem Hersteller bzw. dem Anwender frei, unterschiedlichste Ventilausführungen bei gleichbleibendem Ventilgehäuse bzw. gleichbleibendem Gehäusekorpus und Gehäusedeckel zu realisieren. Die gleichbleibende Schnittstelle für den Adapter, welche durch die Korpusschnittstelle und die Deckelschnittstelle realisiert ist, stellt ein modulares Ventilgehäuse-Baukastensystem bereit. Mit dem erfindungsgemäßen Ventilgehäuse-Baukastensystem ist es möglich, für unterschiedliche Anwendungen gleichbleibende Ventilgehäuse bzw. Gehäusekorpus und Gehäusedeckel herzustellen und zu verwenden und lediglich durch Funktions- oder Konstruktions-Konfiguration mittels eines Adapters ein Hubventil bereitzustellen, welches an die individuellen Anforderungen angepasst ist. Durch die Vereinheitlichung von Gehäusekorpus und Gehäusedeckel lässt sich auch eine vereinheitlichte Montage gewährleisten, was eine Verringerung des Schulungsaufwands und eine effizientere Gestaltung von Fertigungs-, Montage-, und Wartungsvorgänge erlaubt. Zur Herstellung unterschiedli-Ventilarten und unterschiedlicher Ventil-Gestaltungen werden wesentlich dank der Erfindung wesentlich weniger unterschiedliche Gussformen benötigt. Die Vereinheitlichung der Deckelform für unterschiedliche Ventilarten oder Ventil-Gestaltungen verringert die Herstellkosten. Überraschenderweise hat sich gezeigt, dass der Adapter, der ein Gussteil sein kann, eine im Vergleich schnellere und einfachere Nachbearbeitung und somit eine bessere Anpassbarkeit an jede individuell benötigte Konfiguration erlaubt. Der Adapter kann als 3D-Druckteil gefertigt sein.

Gemäß einer erfindungsgemäßen Ausführung umfasst ein Ventilgehäuse-Baukastensystem wenigstens einen Adapter zum Konfigurieren des Hubventils als Kegelventil mit einem kegelartigen Stellglied, das von einer Stellstange getragen ist. Die Stellstange ist translatorisch entlang der Hubachse beweglich, um das kegelartige Stellglied gegenüber einem ortsfesten in dem Gehäusekorpus angeordneten Ventilsitz zu positionieren. Der Adapter umfasst einen hülsenförmigen Führungsabschnitt, der sich ausgehend von dem Halteflanschabschnitt in Richtung der Hubachse erstreckt. Der hülsenförmige Führungsabschnitt umfasst eine Führungsöffnung zum koaxialen vorzugsweise formkomplementären Aufnehmen der Stellstange. In dem Führungsabschnitt kann der Adapter eine Führungsöffnung bilden oder aufnehmen. Diese Führungsöffnung kann beispielsweise in Form eines Gleitlagers, eines Kugellagers oder dergleichen gebildet sein. Es kann bevorzugt sein, dass zwischen der Stellstange und dem Führungsabschnitt eine Gleitpassung oder eine Spielpassung ausgebildet ist. Insbesondere steht die Stellstange innerhalb des die translatorische Hubbewegung führenden Abschnitts in einem Berührkontakt mit der Führungsöffnung des Adapters, wobei insbesondere die Stellstange frei von einem Berührkontakt bezüglich des Gehäusedeckels und insbesondere dessen Durchgangsöffnung ist. Gemäß dieser Ausführung ist der Adapter dazu vorgesehen, die Hubbewegung der Stellstange zu führen und diese Funktion ist nicht dem Gehäusedeckel oder einer in dem Gehäusedeckel radial zwischen Stellstange und Gehäusedeckel sitzende Komponente überlassen. Im Verhältnis zu herkömmlichen Ventilen erlaubt dies eine günstigere Fertigung und Montage des Gehäusedeckels, weil die Führungseigenschaften verbessert sind, indem die Stellstange näher an dem mit dem kegelartigen Stellglied in Kontakt bringbaren Ventilsitz geführt ist, wobei insbesondere eine freie Biegelänge der Ventilstange im Vergleich zu einer Führung im Deckel verkürzt ist. Ein Deckel frei von Stangenführung und frei von Stangendichtung braucht die Betätigungsöffnung nicht in Radialrichtung zu überdecken. Ein Deckel kann zum Anbinden einer Laterne, eines
Jochs oder dergleichen am Gehäusekorpus vorgesehen sein. Ein Deckel kann als Anschlussstück zum Befestigen eines insbesondere pneumatischen Stellantriebs am Gehäusekorpus ausgestaltet sein. Ein Deckel zum Anbinden eines Jochs oder eines Stellantriebs kann beispielsweise haubenartig, scheibenartig oder mit umfänglich verteilten Streben oder Balken gestaltet sein.

Gemäß einer bevorzugten Ausführung umfasst das Ventilgehäuse-Baukastensystem eine Stangenabdichtung zum Abdichten zwischen der Stellstange und dem Adapter. Der Adapter weist eine Aufnahme für die vorzugsweise zylinderhülsenförmige Stangenabdichtung auf. Die Stangenabdichtung kann als Spaltdichtung, Labyrinthdichtung oder Packungsdichtung ausgestaltet sein. Die Aufnahme für die Stangenabdichtung kann insbesondere in dem Führungsabschnitt des Adapters angeordnet sein. Es kann bevorzugt sein, dass die Stangenabdichtung in einem axialen Abstand relativ zu dem Gehäusedeckel angeordnet ist. Vorzugsweise ist der Gehäusedeckel frei von einer Stangenabdichtung. In Axialrichtung relativ zu der Hubachse verhindert die Stangenabdichtung eine Leckage des Prozessfluides entlang der Stellstange aus dem Ventilinnenraum, welcher durch den Gehäusekorpus und den Adapter begrenzt ist. Es ist bevorzugt, dass dieser Prozessfluid führende Ventilinnenraum, welcher durch den Adapter und den Gehäusekorpus definiert ist, fluidisch dicht getrennt ist von dem Gehäusedeckel. Mit dem Prozessfluid innerhalb des durch den Adapter und dem Gehäusekorpus definierten Innenraums kommt der Gehäusedeckel betriebsgemäß nicht in Berührung. Gegenüber dem Prozessfluid-führenden "nassen" Ventil-Innenraum, befindet sich der Gehäusedeckel in einem Prozessfluid-freien "trockenen" Umgebungsbereich. Bei einer derartigen Ausführung beschränkt sich die Funktion des Deckels im Wesentlichen auf das Halten des Adapters in dem Gehäusekorpus, das Bereitstellen einer mechanischen Verbindung zu einem Stellantrieb oder einen den Stellantrieb tragenden Joch oder dergleichen sowie darauf, einen mechanischen Schutz des Gehäuseinnenraums bereitzustellen. Indem die Abdichtfunktion, welche üblicherweise dem Gehäusedeckel zugeteilt ist, an eine andere Komponente in Form des Adapters abgegeben ist, kann der Gehäusedeckel wesentlich günstiger mit niedrigeren Anforderungen an die Temperatur- und/oder Medien- bzw. Chemie-beständigen Materialien gefertigt werden als bei herkömmlichen Hubventilen. Darüber hinaus kann ein Hohlraum zwischen den Adaptern und dem Deckel, welcher betriebsgemäß frei von Prozessfluid ist, im Falle eines überraschenden Ausfalls der Stangenabdichtung einen Rückhalteraum für Prozessfluid bereitstellt, so dass im Falle einer Stangenabdichtungs-Fehlfunktion die Kontamination der Umgebung mit Prozessfluid erheblich eingeschränkt sein kann. Es sei klar, dass wenigstens eine Adapterflanschdichtung im Bereich des Halteflanschabschnitts, insbesondere im Bereich der Korpusschnittstelle und/oder im Bereich der Deckelschnittstelle angeordnet sein kann.

Alternativ ist es denkbar, dass das Ventilgehäuse-Baukastensystem eine erste Stangenabdichtung oder Primärdichtung zum Abdichten zwischen der Stellstange und dem Adapter sowie eine zweite Stangenabdichtung oder Sekundärdichtung zum Abdichten zwischen der Stellstange und dem Deckel aufweist. Die Sekundärdichtung kann als Packungsdichtung, Spaltdichtung oder Labyrinthdichtung ausgestaltet sein. Die Primärdichtung ist bevorzugt anders gestaltet als die Sekundärdichtung, beispielsweise aus anderem Material und/oder in anderer Bauweise gefertigt. Beispielsweise kann die Primärdichtung als Spalt- oder Labyrinthdichtung und die Sekundärdichtung als Packungsdichtung realisiert sein. Die Primärdichtung verhindert, dass sich die Fluidströmung ungehindert in Richtung des Deckels ausbreitet. Beispielsweise kryogene oder sehr heiße Prozessmedien werden durch die Primärdichtung davon abgehalten, die Sekundärdichtung mit Prozesstemperatur zu erreichen.

Gemäß einer Ausführung eines Ventilgehäuse-Baukastensystems weist das kegelartige Stellglied einen hülsenförmigen Kragen und einen in Axialrichtung bezüglich der Hubachse durch das Stellglied verlaufenden Druckentlastungskanal auf. Der Adapter trägt eine mit dem Kragen kooperierende Dichtung, insbesondere eine Ringdichtung. Mittels des Kragens und der von dem Adapter getragenen Dichtung kann eine Druckentlastungskammer bereitgestellt sein. Die Druckentlastungskammer kann über den Druckentlastungskanal mit dem Hochdruckbereich oder stromaufwärtigen Bereich des Ventilinnenraums in fluidischer Verbindung stehen. Mittels des Druckentlastungskanals, der sich durch das Stellglied erstreckt, kann Prozessfluid von dem stromaufwärtigen Ventilinnenraumbereich, also ausgehend von dem Prozessfluideingang, in eine Druckentlastungskammer strömen, so dass der Prozessfluiddruck in axialer Richtung der Hubachse von beiden Seiten auf das kegelförmige Stellglied wirkt, damit keine oder nahezu keine Prozessfluid-Druckdifferenz auf das Stellglied wirkt; insbesondere selbst dann nicht, wenn in dem Einlassbereich oder stromaufwärtigen Bereich des Ventilindass im Falle einer Stangenabdichtungs-Fehlfunktion die Kontamination der Umgebung mit Prozessfluid erheblich eingeschränkt sein kann. Es sei klar, dass wenigstens eine Adapterflanschdichtung im Bereich des Halteflanschabschnitts, insbesondere im Bereich der Korpusschnittstelle und/oder im Bereich der Deckelschnittstelle angeordnet sein kann.

Alternativ ist es denkbar, dass das Ventilgehäuse-Baukastensystem eine erste Stangenabdichtung oder Primärdichtung zum Abdichten zwischen der Stellstange und dem Adapter sowie eine zweite Stangenabdichtung oder Sekundärdichtung zum Abdichten zwischen der Stellstange und dem Deckel aufweist. Die Sekundärdichtung kann als Packungsdichtung, Spaltdichtung oder Labyrinthdichtung ausgestaltet sein. Die Primärdichtung ist bevorzugt anders gestaltet als die Sekundärdichtung, beispielsweise aus anderem Material und/oder in anderer Bauweise gefertigt. Beispielsweise kann die Primärdichtung als Spalt- oder Labyrinthdichtung und die Sekundärdichtung als Packungsdichtung realisiert sein. Die Primärdichtung verhindert, dass sich die Fluidströmung ungehindert in Richtung des Deckels ausbreitet. Beispielsweise kryogene oder sehr heiße Prozessmedien werden durch die Primärdichtung davon abgehalten, die Sekundärdichtung mit Prozesstemperatur zu erreichen.

Gemäß einer erfindungsgemäßen Ausführung des Ventilgehäuse-Baukastensystems weist das kegelartige Stellglied einen hülsenförmigen Kragen und einen in Axialrichtung bezüglich der Hubachse durch das Stellglied verlaufenden Druckentlastungskanal auf. Der Adapter trägt eine mit dem Kragen kooperierende Dichtung, insbesondere eine Ringdichtung. Mittels des Kragens und der von dem Adapter getragenen Dichtung kann eine Druckentlastungskammer bereitgestellt sein. Die Druckentlastungskammer kann über den Druckentlastungskanal mit dem Hochdruckbereich oder stromaufwärtigen Bereich des Ventilinnenraums in fluidischer Verbindung stehen. Mittels des Druckentlastungskanals, der sich durch das Stellglied erstreckt, kann Prozessfluid von dem stromaufwärtigen Ventilinnenraumbereich, also ausgehend von dem Prozessfluideingang, in eine Druckentlastungskammer strömen, so dass der Prozessfluiddruck in axialer Richtung der Hubachse von beiden Seiten auf das kegelförmige Stellglied wirkt, damit keine oder nahezu keine Prozessfluid-Druckdifferenz auf das Stellglied wirkt; insbesondere selbst dann nicht, wenn in dem Einlassbereich oder stromaufwärtigen Bereich des Ventilin-
Gehäusekorpus können in Axialrichtung bezüglich der Hubachse wenigstens einen Vorsprung, vorzugsweise einen vollumfänglichen Vorsprung, aufweisen, der größer ist als die Flanschhöhe des Halteflanschabschnittes des Adapters. Gehäusekorpus und Gehäusedeckel können dazu ausgestaltet sein, den Adapter vollständig zu umgeben. Der Adapter ist bevorzugt vollständig innerhalb des Gehäuseinnenraums unterbringbar, welches durch den Gehäusedeckel und den Gehäusekorpus definiert ist. Wie oben beschrieben, kann der Adapter dazu ausgebildet sein, den Gehäuseinnenraum in einem nassen, Prozessfluid-führenden Ventilinnenraum und einem trockenen, betriebsgemäß prozessfluidfreien Hohlraum zu unterteilen. Alternativ ist es denkbar, dass der Adapter den Gehäuseinnenraum unterteilt in einen Prozessfluid-führenden Ventilinnenraum, in dem die Prozessfluid-Strömung geführt ist, und in einen geschützten Hohlraum zwischen Deckel und Adapter, der von der Strömung des Prozessfluids separiert ist, in dem also geringere (praktisch keine) Strömungsgeschwindigkeit herrscht, und/oder in dem eine abgeschwächtere Temperatur und/oder ein abgeschwächter Druck im Vergleich zur Temperatur und/oder zum Druck der Prozessfluidströmung im Ventilinnenraum herrscht. Durch eine vollständige Unterbringung des Funktions- und/oder Konstruktions-Konfigurations-Adapters im Inneren des durch den Gehäusedeckel und den Gehäusekorpus gebildeten Gehäuses, ist der Ventiladapter vor äußeren Einflüssen geschützt untergebracht, wie Witterungseinflüssen, mechanischen Einflussflüssen. Dadurch kann eine sichere Funktion des Hubventils mittels des Adapters selbst bei problematischen Umgebungsbedingungen sichergestellt sein.

Bei einer bevorzugten Ausführung des Ventilgehäuse-Baukastensystems bildet die Deckelschnittstelle gemeinsam mit der Korpusschnittstelle eine vorzugsweise ringförmige Aufnahme, in die der Halteflanschabschnitt von einem der mehreren Adapter einsetzbar ist. Die ringförmige Aufnahme erstreckt sich zumindest teilweise, vorzugsweise vollumfänglich in Umfangsrichtung um die Hubachse. Bezüglich der Axialrichtung der Hubachse kann der Gehäusekorpus und/oder der Gehäusedeckel mit einem Rücksprung, wie eine Stufe bzw. eine Schulter, ausgestattet sein, an dem eine vorzugsweise flache Oberseite bzw. Unterseite des zylindrischen Halteflanschabschnitts des Adapters sich axial abstützen kann. Es sei klar, dass der Halteflanschabschnitt keine idealzylindrische Form eines geraden Kreiszylinders mit perfekter kreisförmiger Grundfläche zu haben braucht. Vielmehr kann der zylindrische Halteflanschabschnitt bei einem erfindungsgemäßen Ventilgehäuse-Baukastensystems rund oder unrund, insbesondere abweichend von einer Kreisform und/oder mit radialen und/oder axialen Vorsprüngen und/oder Rücksprüngen ausgestaltet sein. Der zylindrische Halteflanschabschnitt kann beispielsweise einen kreisförmigen, polygonalen, ovalen oder anderen Querschnitt haben. Vorsprünge und/oder Rücksprünge des Halteflanschabschnitts können für vorzugweise formkomplementäre Aufnahmen in der Korpusschnittstelle und/oder der Deckelschnittstelle angepasst sein.

Gemäß einer Weiterbildung des Ventilgehäuse-Baukastensystems weist die Aufnahme eine vorbestimmte Axialhöhe in Richtung der Hubachse auf. Die Axialhöhe der Aufnahme erstreckt sich von dem Gehäusekorpus zu dem Gehäusedeckel. Die Axialhöhe stellt wenigstens eine vorbestimmte lichte Weite bereit. Insbesondere können die Halteflanschabschnitte der mehreren Adapter und die Aufnahme formkomplementär zu einander sein. Vorzugsweise kann die Axialhöhe gleich der Flanschhöhe sein.

Es sei klar, dass in Axialrichtung über und/oder unter dem Halteflanschabschnitt wenigstens eine Dichtung, wie eine Ringdichtung, in der Aufnahme untergebracht sein kann. Die Verwendung einer Dichtung in der Aufnahme stellt keine Beeinträchtigung einer beispielsweise formkomplementären Fassung der vom Gehäusekorpus und Gehäusedeckel gebildeten Aufnahme für den Adapter dar.

Gemäß einer bevorzugten Ausführung eines Ventilgehäuse-Baukastensystems ist die Korpusschnittstelle durch eine stufenartige Aussparung des Gehäusekorpus an dessen in Axialrichtung bezüglich der Hubachse oberen Korpusende definiert. An der radialen Innenseite des oberen Korpusendes kann vorzugsweise im Bereich der Betätigungsöffnung eine vorzugsweise vollumfänglich, zumindest teilweise umfänglich umlaufende Abstufung mit einer radialen Breite ausgehend von der Innenseite (der lichten Weite der Betätigungsrichtung) des Gehäusekorpus gebildet sein, die insbesondere wenigstens 5 mm, vorzugsweise wenigstens 10 mm breit ist. In Axialrichtung kann die Aussparung wenigstens 5 mm, vorzugsweise wenigstens 10 mm tief sein.

Gemäß einer Ausführung eines Ventilgehäuse-Baukastensystems weist die Korpusschnittstelle einen Korpus-Innendurchmesser auf, der zu einem Adapter-Außendurchmesser, insbesondere dem Flanschdurchmesser, korrespondiert. Alternativ oder zusätzlich kann die Deckelschnittstelle einen Deckel-Innendurchmesser aufweisen, der zu einem Adapter-Außendurchmesser korrespondiert. Es ist denkbar, dass der Adapter unterschiedliche Außendurchmesser aufweist, wobei ein erster Außendurchmesser passend zu einem vorbestimmten Korpus-Innendurchmesser dimensioniert ist und wobei ein zweiter Adapter-Außendurchmesser entsprechend einem vorbestimmten Deckel-Innendurchmesser dimensioniert ist. Die mit dem jeweiligen angepassten Flanschdurchmesser ausgestalteten, sich über eine gewisse Axialbreite erstreckenden Pass-Abschnitte des Adapters können in Axialrichtung bezüglich der Hubachse eine Höhe von wenigstens 5 mm, vorzugsweise wenigstens 10 mm aufweisen. Beispielsweise kann ein angepasster Adapter-Außendurchmesser den vorbestimmten Flanschdurchmesser realisieren und einsetzbar in die Korpusschnittstelle mit vorbestimmtem Korpus-Innendurchmesser sein. Ein zweiter, kleinerer vorbestimmter Adapter-Außendurchmesser kann korrespondierend zu einem entsprechenden Deckel-Innendurchmesser und einen Montagekragen des Adapters bilden, der in Axialrichtung in den Deckel einsetzbar ist. Auf diese Weise lässt sich eine sichere und genaue Positionierung und Halterung des Adapters realisieren.

Gemäß einer speziellen Ausgestaltung eines Ventilgehäuse-Baukastensystems umfasst das Baukastensystem ferner wenigstens einen Adapter zum Konfigurieren des Hubventils als Käfigventil mit einem kolbenartigen Stellglied und einem den Prozessfluiddurchgang relativ zu der Hubachse umgebenden Ventilkäfig, wobei der Ventilkäfig eine mit dem Stellglied kooperierende translatorische Führung umfasst. Der Ventilsitz kann bei dieser Ausgestaltung lösbar mit dem Gehäusekorpus verbunden sein, indem der Ventilsitz zwischen dem Ventilkäfig und dem Gehäusekorpus geklemmt ist.

Die Erfindung betrifft auch ein Hubventil mit einem entlang einer Hubachse translatorisch beweglichen Hubventilglied zum Einstellen einer Prozessfluidströmung einer prozesstechnischen Anlage, wie einer Chemieanlage, einer Lebensmittel verarbeitenden Anlage, einem Kraftwerk oder dergleichen. Das Hubventil umfasst einen Gehäusekorpus mit einem Prozessfluideingang, einem Prozessfluidausgang und einem zwischen dem Prozessfluideingang und dem Prozessfluidausgang angeordneten Prozessfluiddurchgang sowie einer Betätigungsöffnung zum Einführen einer Stellstange zum Betätigen des Hubventilglieds, wobei die Hubachse der Stellstangenbewegung die Betätigungsöffnung und den Prozessfluiddurchgang schneidet. Das Hubventil umfasst ferner einen Gehäusedeckel, der die Betätigungsöffnung abdeckt. Der Gehäusedeckel kann eine sich in Richtung der Hubachse erstreckende Durchgangsöffnung zum Aufnehmen der Stellstange aufweisen und/oder einen Befestigungsabschnitt zum Montieren eines insbesondere pneumatischen Stellantriebs oder eines Jochs, einer Laterne oder dergleichen, zum Tragen eines pneumatischen Stellantriebs. Wie oben beschrieben kann die Durchgangsöffnung vorzugsweise berührungsfrei und/oder dichtungsfrei bezüglich der Stellstange ausgeführt sein.

Das Hubventil umfasst ferner einen Adapter zum Konfigurieren des Hubventils als Kegelventil. Das heißt, bei dem Hubventil ist das Hubventilglied ein kegelartiges Ventilglied (Ventilkegel). Der sogenannte Ventilkegel hat eine sich abschnittsweise oder vollständig in Hubachsenrichtung verjüngende Kontur, die nicht idealkonusförmig sein muss. Der Adapter weist einen Halteflanschabschnitt auf und umfasst einen hülsenförmigen Führungsabschnitt, der sich ausgehend von dem Halteflanschabschnitt in Richtung der Hubachse erstreckt. Der Führungsabschnitt weist eine Führungsöffnung zum koaxialen vorzugsweise formschlüssigen Aufnehmen der Stellstange auf, insbesondere in Form einer Gleit- oder Spielpassung gestalteten Formpassung. Der Gehäusekorpus definiert gemeinsam mit dem Gehäusedeckel eine Aufnahme, in der der Halteflanschabschnitt angeordnet ist. Vorzugsweise umfasst das Hubventil auch die Stellstange und das kegelförmige Stellglied, das an der Stellstange befestigt ist. Die Stellstange erstreckt sich durch die Durchgangsöffnung des Gehäusedeckels und durch die Führungsöffnungen des Adapters.

Gemäß einer Weiterbildung des Hubventils kann es mit einem Adapter für eine Funktions-Konfiguration des Hubventils als Kegelventil ausgestaltet sein. Bei dem Hubventil kann ein Adapter aus einem Satz unterschiedlicher Kegelventil-Konfigurations-Adapter ausgewählt und eingesetzt sein. Der Kegelventil-Konfigurations-Adapter des Hubventils kann wie oben bezüglich des Ventilgehäuse-Baukastensystems beschrieben ausgestaltet sein. Ebenso kann die in dem Kegelventil-Konfigurations-Adapter angepassten übrigen Bauteile entsprechend dem oben beschriebenen Ventilgehäuse-Baukastensystem gestaltet sein, beispielsweise der Korpus, der Deckel, ein Ventilsitz, etc. Das als Kegelventil konfigurierte Hubventil kann weitere Kegelventil-Konfigurations-Adapter umfassen und kann insbesondere ohne weiteren andersartigen Adapter, insbesondere ohne Käfigventil-Adapter realisiert sein.

Bevorzugte Ausgestaltungen der Erfindung werden in den Unteransprüchen beschrieben. Weitere Merkmale und Vorteile der Erfindung werden durch die nachfolgende Beschreibung bevorzugter Ausführungen gemäß der beiliegenden Figuren deutlich, in denen zeigen:
- Fig. 1a: ein Hubventil in einer Käfigventil-Konfiguration mit einem ersten Adapter eines Ventilgehäuse-Baukastensystems;
- Fig. 1b: der Käfigventil-Konfigurations-Adapter des in Fig. 1a gezeigten Hubventils;
- Fig. 2a: ein erfindungsgemäßes Hubventil in einer Kegelventil-Konfiguration mit einem zweiten Adapter des erfindungsgemäßen VentilgehäuseBaukastensystems;
- Fig. 2b: der Kegelventil-Konfigurations-Adapter des Hubventils gemäß Fig. 2a;
- Fig. 3a: ein erfindungsgemäßes Hubventil in einer zweiten KegelventilKonfiguration mit Druckentlastungskammer mit einem dritten Adapter des erfindungsgemäßen Ventilgehäuse-Baukastensystems, wobei das Kegelventil in einer Schließstellung dargestellt ist;
- Fig. 3b: der Adapter des Hubventils gemäß Fig. 3a;
- Fig. 3c: das Hubventil gemäß Fig. 3a, wobei sich das Stellglied in einer geöffneten Stellung befindet;
- Fig. 4a: ein erfindungsgemäßes Hubventil mit einem anderen KegelventilKonfigurations-Adapter des erfindungsgemäßen Ventilgehäuse-Baukastensystems, welcher eine Befestigungsnut zum Aufnehmen eines Strömungsteilers aufweist;
- Fig. 4b: der Adapter des Hubventils gemäß Fig. 4a;
- Fig. 5a: ein Hubventil mit einem weiteren Adapter des erfindungsgemäßen Ventilgehäuse-Baukastensystems; und
- Fig. 5b: der Adapter des Hubventils gemäß Fig. 5a.

Für dieselben oder ähnliche Komponenten werden nachfolgend zur einfacheren Lesbarkeit dieselben oder ähnliche Bezugszeichen verwendet. Bezüglich der unterschiedlichen Ventilkonfigurationen bzw. Adapter werden für ähnliche Bauteile unterschiedlicher Konfigurationen um 100 erhöhte Bezugszeichen verwendet.

Ein Hubventil ist im Allgemeinen mit dem Bezugszeichen 1 bezeichnet. Das Hubventil umfasst als Hauptbestandteil ein Gehäuse 3, das einen Gehäusekorpus 5 und einen Gehäusedeckel 7 umfasst. Zwischen dem Gehäusekorpus 5 und dem Gehäusedeckel 7 sind erfindungsgemäß unterschiedlichste Adapter 100, 200, 300, 400 oder 500 für je eine der unterschiedlichen Funktions- oder Konstruktions-Konfigurationen des Hubventils 1 anzuordnen.

Der Kerngedanke des Ventilgehäuse-Baukastensystems liegt in der Verwendung desselben Gehäuses, also desselben Gehäusedeckels und desselben Gehäusekorpus, in Verbindung mit einem Funktions- und/oder Konstruktions-Konfigurations-Adapter, welcher gemäß der Erfindung aus einer Reihe unterschiedlicher Funktions- und/oder Konfigurations-Adapter frei gewählt sein kann, die aber alle montagekompatibel bezüglich des gleichbleibenden Gehäuses sind. Durch die Auswahl eines geeigneten Adapters für die in dem zugehörigen Prozess herrschenden Bedingungen kann ein Hubventil einfach passend konfiguriert werden, ohne eine vollständige neue Konstruktion des Hubventils erforderlich zu machen.

Die Schlüsselkomponente des Ventilgehäuse-Baukastensystems liegt in der Verwendung eines für alle unterschiedlichen Funktions- und/oder Konstruktions-Konfigurations-Adapter gleichen Halteflanschabschnitts. Zu dem gleichbleibenden Halteflanschabschnitt der unterschiedlichen Adapter kompatibel ist gehäuseseitig eine Korpusschnittstelle und eine Deckelschnittstelle vorgesehen. Bei dem Ventilgehäuse-Baukastensystem sind der gleichbleibende Gehäusedeckel mit der vorbestimmten Deckelschnittstelle versehen und der gleichbleibende Gehäusekorpus mit einer gleichbleibenden Korpusschnittstelle, wobei die Korpusschnittstelle und Deckelschnittstelle an den gleichbleibenden Halteflanschabschnitt der unterschiedlichen Adapter angepasst sind. Mittels der vereinheitlichen Ausgestaltung von Korpusschnittstelle, Deckelschnittstelle und Halteflanschabschitt ist es gewährleistet, dass bei Verwendung des Ventilgehäuse-Baukastensystems zum Bereitstellen eines funktionellen oder konstruktiv beliebig konfigurierten Hubventils gewährt sein kann, dass dieses sicher abdichtet, präzise regelt, verlässlich und beständig ist.

Bei einem Hubventil 1, das mit Hilfe des Ventilgehäuse-Baukastensystems bereitgestellt ist, ist zwischen dem Gehäusekorpus 5 und dem Gehäusedeckel 7 ein Adapter vorgesehen. Die unterschiedlichen Figuren zeigen Hubventile 1, die mit unterschiedlichen Adaptern ausgestattet sind, um unterschiedliche Funktions- oder Konstruktions-Konfigurationen des jeweils abgebildeten Hubventils 1 zu realisieren.

Der Grundaufbau des Ventilgehäuse-Baukastensystems setzt sich zusammen aus einem Gehäusekorpus 5 mit einem darauf sitzenden Gehäusedeckel 7. Durch den Deckel 7 und den Korpus 5 wird ein Gehäuseinnenraum definiert, der zumindest teilweise Prozessfluid aufnehmen soll. Bei geöffnetem Ventil kann das Prozessfluid von einem Prozessfluideingang 11 durch einen Prozessfluiddurchgang 15 zu einem Prozessfluidausgang 13 des Gehäusekorpus 5 fließen. Das Ventil lässt sich betätigen mit Hilfe der Stellstange, die das Stellglied des Ventils trägt und mit deren Hilfe das Stellglied linear entlang der Hubachse A beweglich ist. Die Stellstange ist aus dem Gehäuseinnenraum 6 durch die Betätigungsöffnung 17 hinausgeführt. Der Deckel 7 verschließt diese Betätigungsöffnung 17.

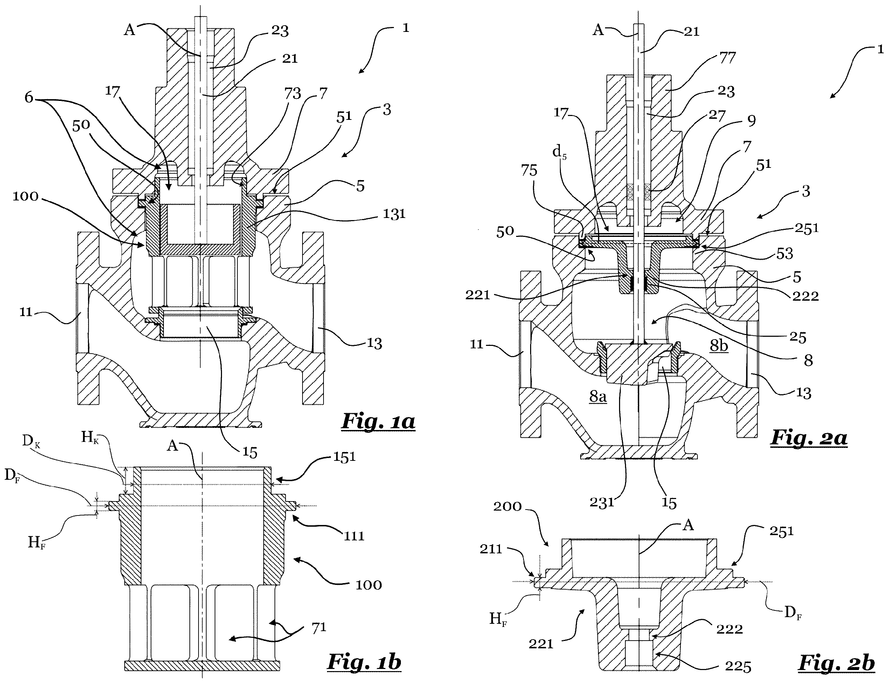

Im Bereich des Prozessfluiddurchgangs 15 kann ein Sitzring oder anderer Ventilsitz 16 befestigt sein, beispielsweise angeschraubt (vgl. Fig. 2a) oder angeflanscht (vgl. Fig. 1a). Der Ventilsitz 16 kann abdichtend mit dem linear beweglichen Stellglied kooperieren. Wenn das Stellglied sich in einem abdichtenden Schließkontakt mit dem Ventilsitz 16 befindet, ist es dem Prozessfluid nicht möglich, vom Prozessfluideingang 11 zum Prozessfluidausgang 13 des Hubventils 1 zu fließen.

Der Prozessfluid führende "nasse" Ventilinnenraum 8 ist in geschlossenem Zustand des Hubventils 1 unterteilt in einen eingangsseitigen bzw. stromaufwärtigen Bereich, der als Hochdruck-Bereich 8a bezeichnet sein kann, und in einem stromabwärtigen bzw. ausgangsseitigen Bereich des Ventilinnenraums 8, der als Niederdruckbereich 8b bezeichnet sein kann. Es sei klar, dass die exemplarische Abbildung in den Figuren zur Einfachheit der Lesbarkeit mit stets gleicher Durchströmungsrichtung vom Prozessfluideingang 11 zum Prozessfluidausgang 13 dargestellt ist, wobei es denkbar sein kann, dass ein Hubventil 1 in der umgekehrten Strömungsrichtung, also vom Prozessfluidausgang 13 zum Prozessfluideingang 11, gemäß der hier verwendeten Nomenklatur, durchströmt sein kann, mit entsprechend umgekehrten Druckverhältnissen.

Ein Hubventil, das mit einem Adapter aus dem Ventilgehäuse-Baukastensystem als Käfigventil konfiguriert ist, zeigt Fig. 1a und den eingesetzten Adapter 100 zeigt Fig. 1b. Der Adapter 100 ist mit seinem Halteflanschabschnitt 111 in den Gehäusekorpus 5 eingesetzt und wird dort von dem Deckel 7, der mit dem Gehäusekorpus 5 beispielsweise flanschartig verbunden ist, gehalten. Der Deckel 7 weist eine Deckelschnittstelle auf und der Gehäusekorpus 5 eine Korpusschnittstelle, die eine Aufnahme 50 bilden, in die der Adapter 100 eingesetzt ist.

Der Adapter 100 ist dazu ausgelegt, das Hubventil 1 gemäß Fig. 1a als Käfigventil auszugestalten. Das Stellglied ist mit einem Hubkörper 131 gebildet, der fest mit der Stellstange 21 verbunden ist, die sich entlang der Hubachse A translatorisch auf und ab bewegen kann. Der Hubkörper 131 hat eine kreiszylindrische Grundfläche, deren äußere Umfangskante mit einem Ventilsitz am Prozessfluiddurchgang 15 des Gehäusekörpers 5 in Kontakt kommen kann.

Der Kolben 131 hat eine zylindrische Umfangsfläche, die sich in Richtung der Hubachse A ausdehnt, um die Öffnungen des Ventilkäfigs 71 vollständig abzudecken und das Ventil so zu verschließen. Der Ventilkäfig 71 ist ein Teil des Adapters 100. Die innere Umfangsfläche des Ventilkäfigs 71 ist im Wesentlichen formkomplementär zu der äußeren Umfangsfläche des Hubkolbens 131 dimensioniert, so dass der Hubkolben 131 in Axialrichtung A gleitend durch den Ventilglied 71 geführt ist und damit der Kolben 131 einen abdichtenden Verschluss bewirken kann.

Der Adapter 100 hat einen kreiszylinder-ringförmigen Halteflanschabschnitt 111. Der Halteflanschabschnitt 111 hat einen bestimmten Flanschdurchmesser D_{F} und eine bestimmte Flanschhöhe H_{F}. Wie in Fig. 1a zu sehen, hat der Gehäusekorpus 5 im Bereich der Korpusschnittstelle einen Korpus-Innendurchmesser d₅, der korrespondierend zu dem Flanschdurchmesser D_{F} dimensioniert ist. Korpus-Innendurchmesser d₅ und Flanschdurchmesser D_{F} können beispielsweise gemäß einer Passung aufeinander abgestimmt sein, beispielsweise einer Spielpassung oder einer Presspassung. Es sei klar, dass im Halteflanschabschnitt 111 radiale und/oder axiale Vor- bzw. Rück-Sprünge des Halteflanschabschnitts 111 bzw. der Korpusschnittstelle vorgesehen sein können, um eine eindeutige Positionierung des Adapters 100 bezüglich des Korpus 5 festzulegen.

In Axialrichtung A oberhalb des Halteflanschabschnittes 111 und in Radialrichtung R versetzt, weist der Adapter 100 einen Montagekragen 151 auf, der dazu ausgestaltet ist, mit einer korrespondierenden Montageinnenfläche 73 des Deckels 7 zu kooperieren, beispielsweise als Gleitpassung oder Spielpassung. Der Deckel 7 kann im Bereich der Deckelschnittstelle mit einem Adapterdurchmesser d₇ gebildet sein, der insbesondere zu dem Durchmesser D_{K} des Montagekragens 151 korrespondierend dimensioniert ist. Die axiale Längserstreckung bzw. Kragenhöhe H_{K} entlang welcher der Adapter 100, durch den mit dem Kragendurchmesser D_{K} ausgebildet ist, kann größer sein als die Flanschhöhe H_{F}, entlang welcher der Halteflanschabschnitt 111 durchgehend den konstanten Flanschdurchmesser D_{F} aufweist.

Fig. 2a zeigt ein als Kegelventil konfiguriertes Hubventil 1 und Fig. 2b den dazu gehörigen Kegelventil-Konfigurations-Adapter 200. Der Adapter 200 umfasst als seine Hauptbestandteile einen hülsenförmigen Führungsabschnitt 221, einen daran anschließenden tellerförmigen Halteflanschabschnitt 211 und einen an diesem anschließenden Montagekragenabschnitt 251. Der Montagekragenabschnitt 251 dient dem Einsetzen des Adapters 200 in eine an den Adapter 200 angepassten Deckelschnittstelle des Gehäusedeckels 7. Der Montagekragen weist einen Außendurchmesser, der als Kragendurchmesser D_{K} bezeichnet sein kann, auf, welcher formkomplementär zu dem Deckel-Innendurchmesser d₇ gebildet ist. Der Montagekragen 251 erstreckt sich axial in Richtung der Hubachse A über eine Höhe, die als Kragenhöhe H_{K} bezeichnet sein kann mit im Wesentlichen konstantem Kragendurchmesser D_{K}.

Der Deckel 7 hat eine zu dem Montagekragen 251 komplementäre Innenfläche, die als Montageinnenfläche 73 bezeichnet sein kann, entlang welcher der Deckel 7 mit einem im Wesentlichen konstanten Deckel-Innendurchmesser d₇ gestaltet ist, wobei die Montageinnenfläche 73 in Axialrichtung A sich ungefähr so weit, vorzugsweise etwas weiter, erstreckt, als die Kragenhöhe H_{K}.

Der tellerförmige Halteflanschabschnitt 211 des Adapters 200 hat in seinem radial äußeren Bereich die vorbestimmte einheitliche Flanschhöhe H_{F}. Durch den Halteflanschabschnitt 211 ist der Flanschdurchmesser D_{F} des Adapters 200 definiert.

Ausgehend von dem tellerförmigen Halteflanschabschnitt 211 radial nach innen versetzt erstreckt sich in Axialrichtung der hülsenförmige Führungsabschnitt 221 des Adapters. Der Führungsabschnitt 221 definiert die Führungsöffnung 222, welche formkomplementär zu der Stellstange 21 ausgebildet ist, um der Stellstange 21 eine Linearführung bereitzustellen.

Der Führungsabschnitt 221 des Adapters 200 ist unterhalb der Führungsöffnung 222 mit einem Dichtungsabschnitt 225 ausgebildet, in dem die Stangenabdichtung 25 befestigt ist. Die Stangenabdichtung 25 kann beispielsweise durch eine Spaltdichtung, Labyrinthdichtung, Stopfdichtung, Balgdichtung oder ähnliches realisiert sein, z.B. mit einer Presspassung. Die Dichtung 25 kann beispielsweise durch einen Sicherungsring in dem Dichtungsabschnitt 225 gehalten und/oder gegen ein Herausfallen in Axialrichtung gesichert sein. Die Dichtung 25 steht in einem abdichtenden Berührkontakt einerseits mit der Stellstange 21 und andererseits mit dem Adapter 200, um zu verhindern, dass Prozessfluid aus dem Ventilinnenraum 8 entlang der Stellstange 21 austritt. Der Hohlraum 9 zwischen dem Deckel 7 und dem Adapter 200 kann insofern zum Prozessfluidfreien, trockenen Umgebungsbereich gezählt werden. Wie in Figur 2a angedeutet, kann alternativ eine zweite Stangenabdichtung als Deckeldichtung 27 zwischen der Ventilstange und dem Deckel vorgesehen sein. Die Deckeldichtung 27 kann als Stopfbuchse ausgebildet sein. Die Stangenabdichtung 25 verhindert bei einer solchen optionalen Ausführung, dass die Prozessfluidströmung aus dem Ventilinnenraum 8 ungehindert an die Deckeldichtung 27 gelangt.

Im Bereich der Deckelschnittstelle und/oder der Korpusschnittstelle können weitere Dichtungen zwischen dem Gehäusebauteil und dem Adapter 200 vorgesehen sein, um eine Leckage des Prozessfluides aus dem Ventilinnenraum 8 zu verhindern.

Wie in Fig. 2a zu sehen, sitzt der Halteflanschabschnitt 211 auf einer radialen Innenschulter 53, die sich vollumfänglich um die Hubachse A erstreckt. Auf der Schulter 53 und unter dem Adapter 200 kann eine Ringdichtung vorgesehen sein. Die Schulter 53 bildet das untere Ende einer Aufnahme 50 für den Adapterhalteflansch 211. Der Innendurchmesser bzw. die lichte Weite der Aufnahme ist definiert durch einen Gehäusekorpus-Innendurchmesser d₅.

In die mit der Schulter 53 gebildete Aufnahme 50 greift in Axialrichtung A ein ringförmiger axialer Vorsprung 75 des Deckels 7 ein. Der Ringvorsprung 75 hat einen Außendurchmesser, der an den Gehäusekorpus-Innendurchmesser d₅ angepasst ist. Beispielsweise kann der Außendurchmesser des Axialvorsprungs 75 des Deckels 7 mit einer Spielpassung oder einer Gleitpassung bezüglich des Gehäusekorpus-Innendurchmessers d₅ bemessen sein.

Radial nach außen versetzt von der Aufnahme 50 kann beispielsweise eine Flanschverbindung zum Befestigen des Deckels 7 an dem Gehäusekorpus 5 vorgesehen sein (nicht näher dargestellt). Durch die Befestigung des Deckels 7 an dem Korpus 5 mit Hilfe der (nicht näher dargestellten) Flanschverbindung 5 wird der Adapter 200 zwischen dem Deckel 7 und dem Korpus 5 befestigt. Zur Befestigung des Adapters 200 zwischen dem Gehäusedeckel 7 und Gehäusekorpus 5 drückt der Axialvorsprung 75 auf die Oberseite des Halteflanschabschnitts 211 und drückt so den Halteflanschabschnitt 211 mit seiner Unterseite gegen die Schulter 53 des Gehäusekörpers 5.

Der Deckel 7 weist eine Durchgangsöffnung 23 für die Stellstange 21 auf, welche sich in Richtung der Hubachse A längs vollständig durch den Deckel 7 erstreckt. Die Durchgangsöffnung 23 hat eine lichte Weite, welche an ihrer schmalsten Stelle größer ist als die Stellstange 21, so dass die Stellstange 21 berührungslos bezüglich des Deckels 23 darin beweglich ist. Wie in Fig. 2a abgebildet, kann die Durchgangsöffnung 23 frei von einer Abdichtung sein. Insbesondere bei einer Konfiguration wie in Fig. 1a abgebildet, ist es aber alternativ denkbar, dass eine Dichtung im Bereich der Durchgangsöffnung 23 und/oder eine Führung für die Stellstange 21 vorgesehen sein kann.

Der Gehäusedeckel 7 hat an seinem oberen Ende einen Montageabschnitt 77 zum Anbinden eines Stellantriebs (nicht näher dargestellt) oder einer Befestigungsstruktur, wie ein Joch, eine Laterne oder dergleichen, zum Tragen eines Stellantriebs. Ein Stellantrieb kann beispielsweise pneumatisch oder elektrisch, einfach- oder doppelt-wirkend, mit oder ohne Federrückstellung, etc. ausgestaltet sein.

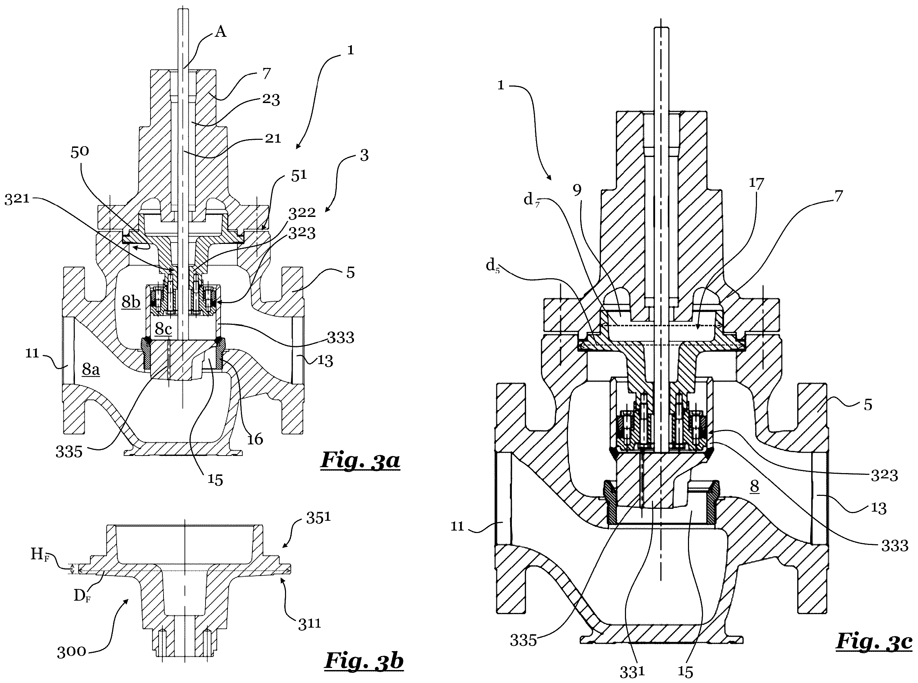

Das Hubventil 1 gemäß Fig. 3a ist wie das Hubventil 1 gemäß Fig. 2a mit einer Kegelventil-Konfiguration ausgestattet. Der Adapter 300 des Hubventils 1 gemäß Fig. 1a entspricht im Wesentlichen dem Aufbau des oben beschriebenen Kegelventil-Konfigurations-Adapters 200. Zusätzlich ist bei dem Kegelventil-Konfigurations-Adapter 300 eine Halterung für eine Dichtung 323 gegenüber einem Kragen 333 des Ventilkegels 331 vorgesehen, um eine Druckentlastungskammer 8c an der Rückseite des Ventilkegels 331 zu bilden.

Bei dem in Fig. 3a dargestellten Hubventil kann das Prozessfluid von dem Hochdruckbereich 8a des Prozessfluid-führenden Ventilinnenraums 8 durch einen Druckentlastungskanal 335 in die Druckentlastungskammer 8c fließen. In der Druckentlastungskammer 8c herrscht im Wesentlichen derselbe Druck wie in dem Hochdruckbereich 8a, so dass in Axialrichtung A auf den auf das kegelförmige Stellglied 331 nahezu keine Druckkraft infolge des Druckgradienten zwischen Hochdruckbereich 8a und Niederdruckbereich 8b wirkt. Es ist im Wesentlichen der Querschnittsbereich der Stellstange 21, für den die Druckentlastungskammer 8c keine Entlastungswirkung bereitstellen kann, so dass in diesem Bereich eine gewisse Druckdifferenz wirkt.

Der Dichtungsabschnitt des Adapters 300 ist in der Fig. 3a nicht im Detail dargestellt. Es kann zum Beispiel entweder im Bereich des Führungsabschnitts 322 oder im Bereich der Halterung 324 von dem Dichtring 323 vorgesehen sein. Alternativ oder zusätzlich kann optional kann eine Deckeldichtung 27 (nicht näher dargestellt) vorgesehen sein.

Das Kegelventilglied 331 ist starr mit einem sich in Axialrichtung erstreckenden hülsenartigen Kragen 333 versehen, der in Umfangsrichtung vollständig fluiddicht geschlossen ist. Die Halterung 324 des Adapters 300 kann sich, wie in Fig. 3a dargestellt, zusammensetzen aus zwei Flanschringen. Die Halterung kann einen inneren Flanschring umfassen, der mit Verbindungsschrauben zum Befestigen des Halterings 324 an einem hülsenförmigen Führungsabschnitt 322 des Adapters 300 vorgesehen ist. Der zweite Flanschring des Dichtungsträgers 324 kann mit dem ersten Flanschabschnitt des Dichtungsträgers 324 verschraubt werden, um gemeinsam mit dem ersten Teil des Dichtungsträgers eine ringnutartige Aufnahme für den Dichtring 323 bereitzustellen.

Der Halteflanschabschnitt 311 und der Montagekragen 351 des Adapters 300 sind genauso gestaltet, wie die entsprechenden Komponenten des oben bezüglich der Fig. 2a und 2b beschriebenen Adapters 200.

Fig. 3a zeigt das Hubventil mit Druckentlastungskammer 8c in geschlossenem Zustand und Fig. 3c zeigt dasselbe Hubventil, welches Fig. 3a zeigt, in einer geöffneten Stellung des Ventils. Bei Fig. 3a befindet sich der Ventildeckel in einem abdichtenden Berührkontakt mit dem Ventilsitz 16. In dem in Fig. 3c abgebildeten Öffnungszustand befindet sich der Ventildeckel 331 in seiner weitest möglichst geöffneten Stellung, um den Öffnungsquerschnitt des Prozessfluiddurchgangs 50 gemäß der abgebildeten Hubventilkonfiguration maximal freizugeben, so dass Prozessfluid mit der größten bei dieser Konfiguration möglichen Volumenströmung vom Prozessfluideingang 11 zum Prozessfluidausgang 13 fließen kann.

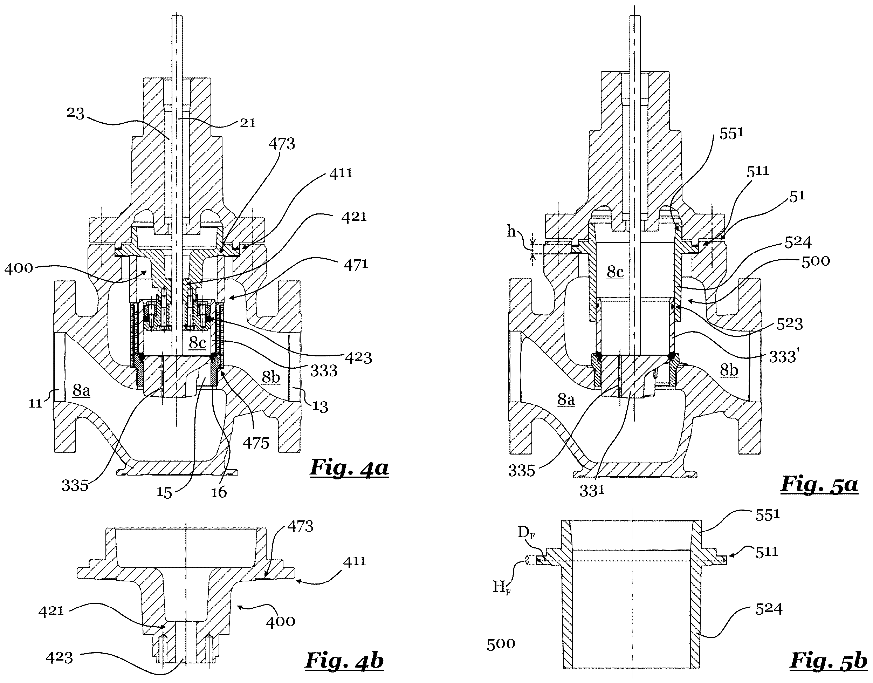

Fig. 4a zeigt ein weiteres Hubventil, das gemäß dem Ventilgehäuse-Baukastensystem mit einem anderen Kegelventil-Konfigurations-Adapter 400 ausgestattet ist. Den Adapter 400 zeigt Fig. 4b im Detail. Der Adapter 400 ist nahezu identisch mit dem Adapter 300, welchen Fig. 3b zeigt. Die Adapter 300 und 400 unterscheiden sich dadurch, dass der Adapter 400 an der in den Ventilinnenraum 8 weisenden Unterseite des tellerartigen Halteflanschabschnitts 411 mit einer Ringnut 473 zur Aufnahme eines Strömungsteilers 471 ausgestattet ist. Mit Hilfe der Ringnut 473 in dem Adapter 400 kann der in der Fig. 4a gezeigte Strömungsteiler 471 in einer definierten Montageposition in dem Ventilgehäuse gehalten werden.

Der Gehäusekorpus 5 kann ebenfalls eine Haltenut 475 für den Strömungsteiler 471 aufweisen. Der Strömungsteiler 471 ist ähnlich einem Ventilkäfig gestaltet und weist zahlreiche radiale Öffnungen auf, die jeweils einen kleinen Innendurchmesser haben, um eine große Druckdifferenz zwischen Hochdruckbereich 8a und Niederdruckbereich 8b selbst bei vollständig geöffnetem Kegelventil vorzuhalten.

Unterhalb des Strömungsteilers ist der Ventilsitzring 16 ortsfest an dem Gehäuse angeordnet. Der Ventilsitzring 16 kann bei einer derartigen Ausgestaltung mit einer weiteren Montagemöglichkeit für den Strömungsteiler 471 ausgestaltet sein (alternativ oder zusätzlich zu einer der zuvor beschriebenen Haltenuten 473, 475).

Wie der Adapter 300 ist auch der Adapter 400 mit einem Halteflanschabschnitt 411 ausgestaltet, die identisch zu den Halteflanschabschnitten 211, 111 der zuvor beschriebenen Adapter ist, so dass die Adapter austauschbar in das Ventilgehäuse 3 einsetzbar sind.

Fig. 5a zeigt ein Hubventil 1, das auf Basis des Ventilgehäuse-Baukastensystems mit einem anderen Adapter 500 ausgestattet und mit dessen Hilfe als Kegelventil konfiguriert ist. Funktionell ähnlich den zuvor bezüglich der Fig. 3a, 3b und 4a beschriebenen Kegelventile weist auch das in Fig. 5a gezeigte Kegelventil eine Druckentlastungskraft 8c auf, die über einen sich durch den Ventilkegel 331 erstreckenden Druckentlastungskanal 335 mit dem Hochdruckbereich 8a fluidisch verbunden ist.

Der Adapter 500 unterscheidet sich von den Adaptern 400 und 300 dadurch, dass er ohne Führungsabschnitt realisiert ist und außer dem Montagekragen 551 und dem Halteflanschabschnitt 511 als weitere funktionelle Komponente nur einen Dichthülsenabschnitt 524 aufweist, welcher gegenüber dem Kragen 333' des Kegelventils 331 eine Dicht-Gegenkontaktfläche bereitstellt. In dem Kontaktbereich zwischen dem Kragen 333' des Ventilkegels 331 und dem Dichthülsenabschnitt 524 des Adapters 500 ist vorzugsweise eine Dichtung 523 angeordnet. Die Dichtung kann beispielsweise in Form eines Dichtrings 523 realisiert sein, der in einer Befestigungsnut am Außenumfang des Kragens 333' sitzt. Alternativ ist es denkbar, dass eine Dichtung in einer radial innenseitigen Nutaufnahme der Dichthülse 524 sitzt (nicht näher dargestellt). Bei dem Hubventil 1 gemäß Fig. 5a können eine Dichtung und/oder eine Stellstangenführung von dem Deckel 5 getragen sein.

Die in der vorstehenden Beschreibung, in den Figuren und den Ansprüchen offenbarten Merkmale können sowohl einzeln als auch in beliebiger Kombination für die Realisierung der Erfindung in den verschiedenen Ausgestaltungen von Bedeutung sein.

### Bezugszeichenliste

- 1: Hubventil
- 3: Gehäuse
- 5: Gehäusekorpus
- 6: Gehäuseinnenraum
- 7: Gehäusedeckel
- 8: Ventilinnenraum
- 8a: Hochdruckbereich
- 8b: Niederdruckbereich
- 8c: Druckentlastungskammer
- 9: Hohlraum
- 11: Prozessfluideingang
- 13: Prozessfluidausgang
- 15: Prozessfluiddurchgang
- 16: Ventilsitz
- 17: Betätigungsöffnung
- 21: Stellstange
- 23: Durchgangsöffnung
- 25: Stangenabdichtung
- 27: Deckeldichtung
- 50: Aufnahme
- 53: Innenschulter
- 71: Ventilkäfig
- 73: Montageinnenfläche 73
- 75: Vorsprung
- 77: Montageabschnitt
- 100, 200, 300, 400, 500: Adapter
- 111, 211, 311, 411, 511: Halteflanschabschnitt
- 131: Hubkörper
- 151, 251, 351, 551: Montagekragen
- 221, 222, 322: Führungsabschnitt
- 225: Dichtungsabschnitt
- 323, 523: Dichtung
- 324: Halterung
- 231, 331: Ventilkegel
- 333, 333': Kragen
- 335: Druckentlastungskanal
- 471: Strömungsteiler
- 473: Ringnut
- 475: Haltenut
- 524: Dichthülsenabschnitt

- A: Hubachse, Axialrichtung
- D_{F}: Flanschdurchmesser
- D_{K}: Durchmesser des Montagekragens
- d₅: Korpus-Innendurchmesser
- d₇: Adapterdurchmesser
- h: Axialhöhe
- H_{F}: Flanschhöhe
- H_{K}: Kragenhöhe
- R: Radialrichtung

## Patentansprüche

1. Ventilgehäuse-Baukastensystem zum Bereitstellen einer von mehreren unterschiedlichen Funktions- oder Konstruktions-Konfigurationen für ein Hubventil (1), das zum Einstellen einer Prozessfluidströmung einer prozesstechnischen Anlage, wie einer Chemieanlage, einer Lebensmittel verarbeitenden Anlage, einem Kraftwerk oder dergleichen eingerichtet ist, und das ein entlang einer Hubachse (A) translatorisch bewegliches Hubventilglied (131, 231, 331) aufweist, wobei das Ventilgehäuse-Baukastensystem umfasst:
- einen Gehäusekorpus (5) mit einem Prozessfluideingang (11), einem Prozessfluidausgang (13) und einem zwischen dem Prozessfluideingang (11) und dem Prozessfluidausgang (13) angeordneten Prozessfluiddurchgang (15) sowie einer Betätigungsöffnung (17) zum Einführen der Stellstange (21) zum Betätigen des Hubventilglieds (131, 231, 331) entlang der Hubachse (A); und
- einen Gehäusedeckel (7) zum Abdecken der Betätigungsöffnung (17), der eine sich in Richtung der Hubachse (A) erstreckende Durchgangsöffnung (23) zum Aufnehmen der Stellstange (21) und insbesondere einen Befestigungsabschnitt zum Montieren eines insbesondere pneumatischen Stellantriebs oder eines Jochs, einer Laterne oder dergleichen zum Tragen eines Stellantriebs umfasst, sowie
- mehrere verschiedene Adapter (100, 200, 300, 400, 500) für je eine der unterschiedlichen Funktions- oder Konstruktions-Konfigurationen, wobei jeder der Adapter (100, 200, 300, 400) einen zylindrischen Halteflanschabschnitt (111, 211, 311, 411) mit vorbestimmter Flanschhöhe (H_{F}) und mit vorbestimmtem Flanschdurchmesser (D_{F}) aufweist,
wobei der Gehäusekorpus (5) eine an den Halteflanschabschnitt (111, 211, 311, 411) angepasste Korpusschnittstelle umfasst;
wobei der Gehäusedeckel (7) eine an den Halteflanschabschnitt (111, 211, 311, 411) angepasste Deckelschnittstelle umfasst;
wobei jeder der Adapter (100, 200, 300, 400) einen in Richtung der Hubachse (A) an den Halteflanschabschnitt (111, 211, 311, 411) anschließenden Montagekragen (151, 251, 351, 451, 551) aufweist, der dazu ausgestaltet ist, mit einer korrespondierenden Montageinnenfläche (73) des Gehäusedeckels (7) zu kooperieren, **dadurch gekennzeichnet, dass** ein Übergang von dem Halteflanschabschnitt (111, 211, 311, 411) in den Montagekragen (151, 251, 351, 451, 551) durch einen sich in Richtung der Hubachse (A) erstreckenden Absatz gebildet ist, dessen Außendurchmesser kleiner als der Flanschdurchmesser (D_{F}) und größer als ein Kragendurchmesser (D_{K}) des Montagekragens (151, 251, 351, 451, 551) ist, und der eine konstante Absatzhöhe in Richtung der Hubachse (A) aufweist.

2. Ventilgehäuse-Baukastensystem nach Anspruch 1 umfassend wenigstens einen Adapter (200, 300, 400) zum Konfigurieren des Hubventils (1) als Kegelventil mit einem kegelartigen Stellglied (231, 331), das von der Stellstange (21) getragen ist, wobei der Adapter (200, 300, 400) einen hülsenförmigen Führungsabschnitt (221, 321) aufweist, der sich ausgehend von dem Halteflanschabschnitt (211, 311) in Richtung der Hubachse (A) erstreckt und eine Führungsöffnung (222, 322) zum koaxialen vorzugsweise formkomplementären Aufnehmen der Stellstange (21) aufweist.

3. Ventilgehäuse-Baukastensystem nach Anspruch 1 oder 2, ferner umfassend eine Stangenabdichtung (25) zum Abdichten zwischen der Stellstange (21) und dem Adapter (200, 300, 400), wobei der Adapter, insbesondere in dem Führungsabschnitt (221, 321), eine Aufnahme für die vorzugsweise hülsenförmige Stangenabdichtung (25) aufweist.

4. Ventilgehäuse-Baukastensystem nach einem der Ansprüche 2 oder 3, wobei das kegelartige Stellglied (331) einen hülsenförmigen Kragen (333) und einen in Axialrichtung bezüglich der Hubachse (A) durch das Stellglied verlaufenden Druckentastungskanal (335) aufweist und wobei der Adapter (300, 400, 500) eine mit dem Kragen (333) kooperierende Dichtung (323, 423, 523) trägt.

5. Ventilgehäuse-Baukastensystem nach einem der Ansprüche 2 bis 4, wobei der Adapter (400) und/oder der Gehäusekorpus (5) eine, insbesondere um den Prozessfluiddurchgang (15) verlaufende und/oder ringförmige Formschlussverbindung, wie eine Haltenut (473, 475), zum Aufnehmen eines Strömungsteilers (471) aufweist.

6. Ventilgehäuse-Baukastensystem nach einem der vorstehenden Ansprüche, wobei der Adapter (200, 300, 400) in Axialrichtung bezüglich der Hubachse (A) zwischen dem Gehäusekorpus (5) und dem Gehäusedeckel (7) anzuordnen ist und wobei sich der Deckel (7) ausgehend von der Stellstange (5) in Radialrichtung (R) über den Flanschdurchmesser (D_{F}) hinaus erstreckt.

7. Ventilgehäuse-Baukastensystem nach einem der vorstehenden Ansprüche, wobei die Deckelschnittstelle gemeinsam mit der Korpusschnittstelle eine vorzugsweise ringförmige Aufnahme (50) bildet, in die der Halteflanschabschnitt (111, 211, 311, 411) von einem der mehreren Adapter (100, 200, 300, 400, 500) einsetzbar ist.

8. Ventilgehäuse-Baukastensystem nach Anspruch 7, wobei die Aufnahme (50) eine vorbestimmte Axialhöhe (h) in Richtung der Hubachse (A) aufweist, welche sich von dem Gehäusekorpus (5) zu dem Gehäusedeckel (7) erstreckt, und wenigstens eine vorbestimmte lichte Weite aufweist, wobei insbesondere die Halteflanschabschnitte (111, 211, 311, 411, 511) der mehreren Adapter (100, 200, 300, 400, 500) und die Aufnahme (50) formkomplementär zu einander sind.

9. Ventilgehäuse-Baukastensystem nach einem der vorstehenden Ansprüche, wobei die Korpusschnittstelle durch eine stufenartige Aussparung des Gehäusekorpus (5) an dessen Axialrichtung bezüglich der Hubachse (A) oberen Korpusende (51) definiert ist.

10. Ventilgehäuse-Baukastensystem nach einem der vorstehenden Ansprüche, wobei die Korpusschnittstelle einen Korpus- Innendurchmesser (d5) aufweist, der zu einem Adapter-Außendurchmesser, insbesondere dem Flanschdurchmesser (D_{F}), korrespondiert und/oder wobei die Deckelschnittstelle einen Deckel-Innendurchmesser (d7) aufweist, der zu einem Adapter-Außendurchmesser korrespondiert, insbesondere einem Kragendurchmesser (D_{K}) eines Montagekragens (151, 251, 351, 451, 551) des Adapters (100, 200, 300, 400, 500).

11. Ventilgehäuse-Baukastensystem nach einem der vorstehenden Ansprüche, umfassend wenigstens einen Adapter (100) zum Konfigurieren des Hubventils (1) als Käfigventil mit einem kolbenartigen Stellglied (131) und einem den Prozessfluiddurchgang (15) relativ zu der Hubachse (A) umgebenden Ventilkäfig (71), wobei der Ventilkäfig (71) eine mit dem Stellglied kooperierende translatorische Führung umfasst.

12. Hubventil (1) mit einem entlang einer Hubachse (A) translatorisch beweglichen Hubventilglied (231, 331, 431) zum Einstellen einer Prozessfluidströmung einer prozesstechnischen Anlage, wie einer Chemieanlage, einer Lebensmittel verarbeitenden Anlage, einem Kraftwerk oder dergleichen, umfassend:
- einen Gehäusekorpus (5) mit einem Prozessfluideingang (11), einem Prozessfluidausgang (13) und einem zwischen dem Prozessfluideingang (11) und dem Prozessfluidausgang (13) angeordneten Prozessfluiddurchgang (15) sowie einer Betätigungsöffnung (17) zum Einführen einer Stellstange (21) zum Betätigen des Hubventilglieds (231, 331, 431), wobei die Hubachse (A) die Betätigungsöffnung (17) und den Prozessfluiddurchgang (15) schneidet; und
- einen Gehäusedeckel (7), der die Betätigungsöffnung (17) abdeckt und eine sich in Richtung der Hubachse (A) erstreckende Durchgangsöffnung (23) zum Aufnehmen der Stellstange (21) aufweist und/oder einen Befestigungsabschnitt zum Montieren eines insbesondere pneumatischen Stellantriebs oder eines Jochs, einer Laterne oder dergleichen zum Tragen eines pneumatischen Stellantriebs umfasst, sowie
- einen Adapter (200, 300, 400) zur Konfiguration des Hubventils als Kegelventil, der einen Halteflanschabschnitt (211, 311, 411) aufweist, und einen hülsenförmigen Führungsabschnitt (221, 321, 421) umfasst, der sich ausgehend von dem Halteflanschabschnitt (211, 311, 411) in Richtung der Hubachse (A) erstreckt, und eine Führungsöffnung (222, 323, 423) zum koaxialen Aufnehmen der Stellstange (21) aufweist,
wobei der Gehäusekorpus (5) gemeinsam mit dem Gehäusedeckel (7) eine Aufnahme (50) definiert, in der der Halteflanschabschnitt (211, 311, 411) angeordnet ist;
wobei der Adapter (200, 300, 400) einen in Richtung der Hubachse (A) an den Halteflanschabschnitt (211, 311, 411) anschließenden Montagekragen (251, 351, 451, 551) aufweist, der dazu ausgestaltet ist, mit einer korrespondierenden Montageinnenfläche (73) des Gehäusedeckels (7) zu kooperieren, dadurch gegengezeichnet, dass ein Übergang von dem Halteflanschabschnitt (111, 211, 311, 411) in den Montagekragen (151, 251, 351, 451, 551) durch einen sich in Richtung der Hubachse (A) erstreckenden Absatz gebildet ist, der einen Außendurchmesser, der kleiner als der Flanschdurchmesser (D_{F}) und größer als ein Kragendurchmesser (D_{K}) des Montagekragens (151, 251, 351, 451, 551) ist, und eine konstante Absatzhöhe in Richtung der Hubachse (A) aufweist.

13. Hubventil nach Anspruch 12 mit einem Adapter entsprechend dem des Ventilgehäuse-Baukastensystem gemäß einem der Ansprüche 2 bis 6 jedoch ohne weitere Adapter.

## Claims

1. Valve housing modular system for providing one of several different functional or constructional configurations for a globe valve (1) which is configured for adjusting a process fluid flow of a process plant, such as a chemical plant, a food processing plant, a power plant or the like, and which has a globe valve member (131, 231, 331) movable in translation along a stroke axis (A), wherein the valve housing modular system comprises:
- a housing corpus (5) with a process fluid inlet (11), a process fluid outlet (13) and a process fluid passage (15) arranged between the process fluid inlet (11) and the process fluid outlet (13) as well as an actuating opening (17) for introducing the adjusting rod (21) for actuating the stroke valve member (131, 231, 331) along the stroke axis (A); and
- a housing cover (7) for covering the actuating opening (17), which comprises a through opening (23) extending in the direction of the stroke axis (A) for receiving the adjusting rod (21) and in particular a fastening section for mounting a particularly pneumatic adjusting drive or a yoke, a lantern or the like for carrying an adjusting drive, as well as
- a plurality of different adapters (100, 200, 300, 400, 500) each for one of said different functional or constructional configurations, each of said adapters (100, 200, 300, 400) comprising a cylindrical retaining flange portion (111, 211, 311, 411) having a predetermined flange height (H_{F}) and a predetermined flange diameter (D_{F}),
the housing corpus (5) comprising a corpus interface adapted to the retaining flange portion (111, 211, 311, 411);
wherein the housing cover (7) comprises a cover interface adapted to the retaining flange portion (111, 211, 311, 411),
wherein each adapter (100, 200, 300, 400) comprises a mounting collar (151, 251, 351, 451, 551) adjoining to the retaining flange portion (111, 211, 311, 411) in direction of the stroke axis A, which is designed to cooperate with a corresponding mounting inner surface (73) of the housing cover (7), **characterized in that** a transition from the retaining flange portion (111, 211, 311, 411) to the mounting collar (151, 251, 351, 451, 551) is formed by a step extending in the direction of the stroke axis (A), the step having an outer diameter which is smaller than the flange diameter (D_{F}) and larger than a mounting collar diameter (D_{K}) of the mounting collar (151, 251, 351, 451, 551) and having a constant step height in the direction of the stroke axis (A).

2. Valve housing modular system according to claim 1 comprising at least one adapter (200, 300, 400) for configuring the globe valve (1) as a cone valve with a cone-like adjusting member (231, 331), which is carried by the adjusting rod (21), wherein the adapter (200, 300, 400) has a sleeve-shaped guiding section (221, 321), which, starting from the retaining flange section (211, 311), extends in the direction of the stroke axis (A) and has a guiding opening (222, 322) for the coaxial, preferably shape-complementary, reception of the adjusting rod (21).

3. Valve housing modular system according to claim 1 or 2, further comprising a rod seal (25) for sealing between the adjusting rod (21) and the adapter (200, 300, 400), the adapter having, in particular in the guiding section (221, 321), a receptacle for the preferably sleeve-shaped rod seal (25).

4. Valve housing modular system according to one of claims 2 or 3, wherein the cone-like adjusting member (331) has a sleeve-shaped collar (333) and a pressure relief channel (335) extending through the adjusting member in the axial direction relative to the stroke axis (A) and wherein the adapter (300, 400, 500) carries a seal (323, 423, 523) cooperating with the collar (333).

5. Valve housing modular system according to one of the claims 2 to 4, wherein the adapter (400) and/or the housing corpus (5) has a positive-locking connection, such as a retaining groove (473, 475), in particular extending around the process fluid passage (15) and/or being annular-shaped, for receiving a flow divider (471).

6. Valve housing modular system according to one of the preceding claims, wherein the adapter (200, 300, 400) is to be arranged in the axial direction with respect to the stroke axis (A) between the housing corpus (5) and the housing cover (7) and wherein the cover (7), starting from the adjusting rod (5), extends in the radial direction (R) beyond the flange diameter (D_{F}).

7. Valve housing modular system according to one of the preceding claims, wherein the cover interface together with the corpus interface forms a preferably annular receptacle (50) into which the retaining flange portion (111, 211, 311, 411) of one of the plurality of adapters (100, 200, 300, 400, 500) can be inserted.

8. Valve housing modular system according to claim 7, wherein the receptacle (50) has a predetermined axial height (h) in the direction of the stroke axis (A), which extends from the housing corpus (5) to the housing cover (7), and has at least one predetermined clear width, wherein in particular the holding flange portions (111, 211, 311, 411, 511) of the plurality of adapters (100, 200, 300, 400, 500) and the receptacle (50) are shape-complementary to one another.

9. Valve housing modular system according to one of the preceding claims, wherein the corpus interface is defined by a step-like recess of the housing corpus (5) at its upper corpus end (51) in the axial direction with respect to the stroke axis (A).

10. Valve housing modular system according to one of the preceding claims, wherein the corpus interface has a corpus inner diameter (d5) which corresponds to an adapter outer diameter, in particular the flange diameter (D_{F}), and/or wherein the cover interface has a cover inner diameter (d7) which corresponds to an adapter outer diameter, in particular a collar diameter (D_{K}) of an assembly collar (151, 251, 351, 451, 551) of the adapter (100, 200, 300, 400, 500).

11. Valve housing modular system according to one of the preceding claims, comprising at least one adapter (100) for configuring the globe valve (1) as a cage valve with a piston-like adjusting member (131) and a valve cage (71) surrounding the process fluid passage (15) relative to the stroke axis (A), wherein the valve cage (71) comprises a translatory guide cooperating with the adjusting member.

12. Globe valve (1) with a globe valve member (231, 331, 431) translationally movable along a stroke axis (A) for adjusting a process fluid flow of a process plant, such as a chemical plant, a food processing plant, a power plant or the like, comprising:
- a housing corpus (5) with a process fluid inlet (11), a process fluid outlet (13) and a process fluid passage (15) arranged between the process fluid inlet (11) and the process fluid outlet (13) as well as an actuating opening (17) for introducing an adjusting rod (21) for actuating the globe valve member (231, 331, 431), wherein the stroke axis (A) intersects the actuating opening (17) and the process fluid passage (15); and
- a housing cover (7), which covers the actuating opening (17) and has a through opening (23), which extends in the direction of the stroke axis (A), for receiving the adjusting rod (21) and/or comprises a fastening section for mounting an, in particular pneumatic, adjusting drive or a yoke, or a lantern or the like for carrying a pneumatic adjusting drive, as well as
- an adapter (200, 300, 400) for configuring the globe valve as a conical valve, comprising a retaining flange portion (211, 311, 411) and a sleeve-shaped guiding portion (221, 321, 421) extending from the retaining flange portion (211, 311, 411) in the direction of the stroke axis (A) and having a guiding opening (223, 323, 423) for coaxially receiving the adjusting rod (21),
wherein the housing corpus (5) together with the housing corpus (7) defines a receptable (50), in which the retaining flange portion (211, 311, 411) is arranged;
wherein the adapter (200, 300, 400) comprises a mounting collar (251, 351, 451, 551) adjoining to the retaining flange portion (111, 211, 311, 411) in direction of the stroke axis A, which is designed to cooperate with a corresponding mounting inner surface (73) of the housing cover (7), **characterized in that** a transition from the retaining flange portion (111, 211, 311, 411) to the mounting collar (151, 251, 351, 451, 551) is formed by a step extending in the direction of the stroke axis (A), the step having an outer diameter which is smaller than the flange diameter (D_{F}) and larger than a mounting collar diameter (D_{K}) of the mounting collar (151, 251, 351, 451, 551) and having a constant step height in the direction of the stroke axis (A).

13. Globe valve according to claim 12 with an adapter corresponding to that of the modular valve housing system according to one of the claims 2 to 6 but without further adapters.

## Revendications

1. Système modulaire de boîtier de soupape, pour la mise à disposition de plusieurs configurations de fonctionnement ou de construction pour une soupape de levage (1), laquelle est conçue pour le réglage d'un flux de fluide de processus d'une installation industrielle, telle qu'une installation chimique, une installation de transformation de produits alimentaires, une centrale électrique ou similaire, et laquelle présente un organe de soupape de levage (131, 231, 331) déplaçable en translation le long d'un axe de levage (A), le système modulaire de boîtier de soupape comportant:
- un corps de boîtier (5) avec une entrée de fluide de processus (11), une sortie de fluide de processus (13) et un passage de fluide de processus (15) disposé entre l'entrée de fluide de processus (11) et la sortie de fluide de processus (13) ainsi qu'une ouverture d'actionnement (17) pour l'introduction d'une tige de réglage (21) destinée à actionner l'organe de soupape de levage (131, 231, 331) le long de l'axe de levage (A) ; et
- un couvercle de boîtier (7) destiné à recouvrir l'ouverture d'actionnement (17), lequel comporte une ouverture de passage (23) s'étendant dans la direction de l'axe de levage (A) pour la réception de la tige de réglage (21) et en particulier une section de fixation pour le montage d'un actionneur en particulier pneumatique ou d'une culasse, d'une lanterne ou similaire pour le support d'un actionneur, et
- plusieurs adaptateurs (100, 200, 300, 400, 500) différents respectivement pour l'une des différentes configurations de fonctionnement ou de construction, chacun des adaptateurs (100, 200, 300, 400, 500) présentant une section de bride de maintien (111, 211, 311, 411) cylindrique avec une hauteur de bride (H_{F}) prédéterminée et un diamètre de bride (D_{F}) prédéterminé,
dans lequel le corps de boîtier (5) comporte une interface de corps adaptée à la section de bride de maintien (111, 211, 311, 411);
dans lequel le couvercle de boîtier (7) comporte une interface de couvercle adaptée à la section de bride de maintien (111, 211, 311, 411);
dans lequel chacun des adaptateurs (100, 200, 300, 400) présente un col de montage (151, 251, 351, 451, 551) prolongeant la section de bride de maintien (111, 211, 311, 411) dans la direction de l'axe de levage (A), lequel est conçu pour coopérer avec une surface intérieure de montage (73) correspondante du couvercle de boîtier (7), **caractérisé en ce qu'**une transition de la section de bride de maintien (111, 211, 311, 411) vers le col de montage (151, 251, 351, 451, 551) est formée par un talon s'étendant dans la direction de l'axe de levage (A), dont le diamètre extérieur est inférieur au diamètre de bride (D_{F}) et supérieur à un diamètre de col (D_{K}) du col de montage (151, 251, 351, 451, 551), et lequel présente une hauteur de talon constante dans la direction de l'axe de levage (A).

2. Système modulaire de boîtier de soupape selon la revendication 1, comportant au moins un adaptateur (200, 300, 400) destiné à la configuration de la soupape de levage (1) en tant que soupape à pointeau avec un organe de réglage conique (231, 331) porté par la tige de réglage (21), dans lequel l'adaptateur (200, 300, 400) présente une section de guidage en forme de manchon (221, 321), laquelle s'étend à partir de la section de bride de maintien (211, 311) dans la direction de l'axe de levage (A) et une ouverture de guidage (222, 322) pour la réception coaxiale de la tige de réglage (21), de préférence par complémentarité de forme).

3. Système modulaire de boîtier de soupape selon la revendication 1 ou 2, comportant en outre un joint d'étanchéité de tige (25) pour assurer l'étanchéité entre la tige de réglage (21) et l'adaptateur (200, 300, 400), dans lequel l'adaptateur présente un logement pour le joint d'étanchéité de tige (25) de préférence en forme de manchon, en particulier dans la section de guidage (221, 321).

4. Système modulaire de boîtier de soupape selon l'une des revendications 2 ou 3, dans lequel l'organe de réglage conique (331) présente un col en forme de manchon (333) et un canal de décharge de pression (335) s'étendant à travers l'organe de réglage dans la direction axiale par rapport à l'axe de levage (A) et dans lequel l'adaptateur (300, 400, 500) porte un joint d'étanchéité (323, 423, 523) coopérant avec le col (333).

5. Système modulaire de boîtier de soupape selon l'une des revendications 2 à 4, dans lequel l'adaptateur (400) et/ou le corps de boîtier (5) présente un moyen d'assemblage par complémentarité de forme annulaire et/ou s'étendant autour du passage de fluide de processus (15), tel qu'une rainure de maintien (473, 475), pour la réception d'un diviseur d'écoulement (471).

6. Système modulaire de boîtier de soupape selon l'une des revendications précédentes, dans lequel l'adaptateur (200, 300, 400) est destiné à être disposé entre le corps de boîtier (5) et le couvercle de boîtier (7) dans la direction axiale par rapport à l'axe de levage (A) et dans lequel le couvercle (7) s'étend au-delà du diamètre de bride (D_{F}) dans la direction radiale (R) à partir de la tige de réglage (21).

7. Système modulaire de boîtier de soupape selon l'une des revendications précédentes, dans lequel l'interface de couvercle forme un logement de préférence annulaire (50) conjointement avec l'interface de corps, dans lequel la section de bride de maintien (111, 211, 311, 411) d'un ou de plusieurs adaptateurs (100, 200, 300, 400, 500) peut être insérée.

8. Système modulaire de boîtier de soupape selon la revendication 7, dans lequel le logement (50) présente une hauteur axiale (h) prédéterminée dans la direction de l'axe de levage (A), laquelle s'étend à partir du corps de boîtier (5) jusqu'au couvercle de boîtier (7), et présente au moins une largeur libre prédéterminée, dans lequel en particulier les sections de bride de maintien (111, 211, 311, 411) de la pluralité d'adaptateurs (100, 200, 300, 400, 500) et le logement (50) présentent des formes complémentaires.

9. Système modulaire de boîtier de soupape selon l'une des revendications précédentes, dans lequel l'interface de corps est définie par un évidement en gradins du corps de boîtier (5) à son extrémité de corps supérieure (51) dans la direction axiale par rapport à l'axe de levage (A).

10. Système modulaire de boîtier de soupape selon l'une des revendications précédentes, dans lequel l'interface de corps présente un diamètre intérieur de corps (d5) correspondant à un diamètre extérieur d'adaptateur, en particulier au diamètre de bride (D_{F}) et/ou dans lequel l'interface de couvercle présente un diamètre intérieur de couvercle (d7) correspondant à un diamètre extérieur d'adaptateur, en particulier à un diamètre de col (D_{K}) d'un col de montage (151, 251, 351, 451, 551) de l'adaptateur (100, 200,300,400,500).

11. Système modulaire de boîtier de soupape selon l'une des revendications précédentes, comportant au moins un adaptateur (100) destiné à la configuration de la soupape de levage (1) en tant que soupape à cage avec un organe de réglage du genre piston (131) et une cage de soupape (71) entourant le passage de fluide de processus (15) par rapport à l'axe de levage (A), dans lequel la cage de soupape (71) comporte un moyen de guidage en translation coopérant avec l'organe de réglage.

12. Soupape de levage (1) comprenant un organe de soupape de levage (231, 331, 431) déplaçable en translation le long d'un axe de levage (A) pour le réglage d'un flux de fluide de processus d'une installation industrielle, telle qu'une installation chimique, une installation de transformation de produits alimentaires, une centrale électrique ou similaire, comportant:
- un corps de boîtier (5) avec une entrée de fluide de processus (11), une sortie de fluide de processus (13) et un passage de fluide de processus (15) disposé entre l'entrée de fluide de processus (11) et la sortie de fluide de processus (13) ainsi qu'une ouverture d'actionnement (17) pour l'introduction d'une tige de réglage (21) destinée à actionner l'organe de soupape de levage (131, 231, 331), dans laquelle l'axe de levage (A) coupe l'ouverture d'actionnement (17) et le passage de fluide de processus (15); et
- un couvercle de boîtier (7) recouvrant l'ouverture d'actionnement (17) et présentant une ouverture de passage (23) s'étendant dans la direction de l'axe de levage (A) pour la réception de la tige de réglage (21) et/ou une section de fixation pour le montage d'un actionneur en particulier pneumatique ou d'une culasse, d'une lanterne ou similaire pour le support d'un actionneur pneumatique, et
- un adaptateur (200, 300, 400) pour la configuration de la soupape de levage en tant que soupape à pointeau, lequel présente une section de bride de maintien (211, 311, 411) et comporte une section de guidage (221, 321) en forme de manchon, laquelle s'étend à partir de la section de bride de maintien (211, 311, 411) dans la direction de l'axe de levage (A), et une ouverture de guidage (222, 323, 423) pour la réception coaxiale de la tige de réglage (21),
dans laquelle le corps de boîtier (5) définit un logement (50) conjointement avec le couvercle de boîtier (7), dans lequel est disposée la section de bride de maintien (211, 311, 411);
dans laquelle l'adaptateur (200, 300, 400) présente un col de montage (251, 351, 451, 551) prolongeant la section de bride de maintien (211, 311, 411) dans la direction de l'axe de levage (A), lequel est conçu pour coopérer avec une surface intérieure de montage (73) correspondante du couvercle de boîtier (7), **caractérisée en ce qu'**une transition de la section de bride de maintien (111, 211, 311, 411) vers le col de montage (151, 251, 351, 451, 551) est formée par un talon s'étendant dans la direction de l'axe de levage (A), lequel présente un diamètre extérieur inférieur au diamètre de bride (DF) et supérieur à un diamètre de col (D_{K}) du col de montage (151, 251, 351, 451, 551), et une hauteur de talon constante dans la direction de l'axe de levage (A).

13. Soupape de levage selon la revendication 12, avec un adaptateur correspondant au système modulaire de boîtier de soupape selon l'une des revendications 2 à 6 mais sans adaptateurs supplémentaires.
